(19) Europäisches Patentamt
European Patent Office
Office européen des brevets

(11) **EP 3 582 173 B1**

(12) **EUROPEAN PATENT SPECIFICATION**

(45) Date of publication and mention
of the grant of the patent:
**20.08.2025 Bulletin 2025/34**

(21) Application number: **18751512.7**

(22) Date of filing: **01.02.2018**

(51) International Patent Classification (IPC):
*G06Q 30/02* (2023.01)    *G06Q 50/06* (2024.01)
*G06Q 10/04* (2023.01)

(52) Cooperative Patent Classification (CPC):
**G06Q 30/0206; G06Q 10/04; G06Q 50/06**

(86) International application number:
**PCT/JP2018/003496**

(87) International publication number:
**WO 2018/147168 (16.08.2018 Gazette 2018/33)**

(54) **POWER TRADING ASSISTANCE DEVICE AND MARKET PRICE PREDICTION INFORMATION GENERATION METHOD**

STROMHANDELASSISTENZVORRICHTUNG UND MARKTPREISVORHERSAGEINFORMATIONE RZEUGUNGSVERFAHREN

DISPOSITIF D'ASSISTANCE AU COMMERCE D'ÉNERGIE ET PROCÉDÉ DE GÉNÉRATION D'INFORMATIONS DE PRÉDICTION DE PRIX DE MARCHÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2017 JP 2017023392**

(43) Date of publication of application:
**18.12.2019 Bulletin 2019/51**

(73) Proprietor: **Hitachi, Ltd.
Tokyo 100-8280 (JP)**

(72) Inventors:
• **IKEMOTO, Yu**
**Tokyo 100-8280 (JP)**
• **WATANABE, Tohru**
**Tokyo 100-8280 (JP)**
• **UTSUMI, Masato**
**Tokyo 100-8280 (JP)**
• **OKAMOTO, Yoshihisa**
**Tokyo 100-8280 (JP)**
• **SHIGEMORI, Ikuo**
**Tokyo 100-8280 (JP)**
• **SAKIKUBO, Youko**
**Tokyo 100-8280 (JP)**
• **SAWA, Toshiyuki**
**Tokyo 100-8280 (JP)**
• **GOTOUDA, Nobuhiro**
**Tokyo 100-8280 (JP)**
• **IIMURA, Hiroshi**
**Tokyo 100-8280 (JP)**

(74) Representative: **Mewburn Ellis LLP
Aurora Building
Counterslip
Bristol BS1 6BX (GB)**

(56) References cited:
JP-A- 2005 100 140    JP-A- 2006 053 839
JP-A- 2007 065 954    JP-A- 2007 128 272
US-A1- 2002 161 624   US-A1- 2004 254 899
US-A1- 2010 138 363

## Description

Technical Field

The present invention relates to a power trading assistance device and a market price prediction information generation method, and is suitable for being applied to, for example, a power trading assistance device and a market price prediction information generation method that can support trading of power, in which market fragmentation is predicted.

Background Art

With the promotion of power liberalization, electric utilities can procure power through power trading at a wholesale power exchange. In recent years, initiatives to result in busy market trading, such as introduction of a gross-bidding system, are under consideration. Against this backdrop, it is expected that trading in the wholesale power market becomes busier down the road, and it is important for electric utilities to perform highly economic market trading.

As such a power trading market, there are a variety of power markets, including a forward market, a day-ahead market (a spot market), and an hour-ahead market in the wholesale power exchange, in addition to a futures trading market, an adjustment trading market, and a demand response trading market in a variety of public or private exchanges.

For example, the day-ahead market (the spot market) and an intraday market (the hour-ahead market) are established as main markets of the wholesale power exchange, which is an example of the power market. As a contract method of the spot market, blind single price auction, in which selling bids and buying bids of all 48 frames (48 products in which one day is divided by 30 minutes) are piled up according to a price and an amount and a computer calculates an equilibrium point where a demand curve and a supply curve cross and determines a contract price, is adopted. Trading is not established for a selling bid that is higher than the contract price or a buying bid that is lower than the contract price. Therefore, electric utilities which participate in the market are not always able to have a contract at a bidding price that the electric utilities want. That is, in a case of making a buying bid, a possibility that trading is not established is high with a buying bid of a low price. In order to avoid trading non-establishment, a high buying bid should be made, and thus there is a possibility that a contract is made at an unexpectedly high price. Under the circumstances, in order to realize highly economic trading, it is desirable to determine a trading plan of market trade and bidding of each hour after taking an assumed contract price in the spot market, an own company power generation plan, procurement in the hour-ahead market, and the like into account.

As a technique of performing a trading plan based on such prediction of a market price in a variety of fields related to the power market, for example, a technique of predicting electric energy to be sold and electric energy to be bought, which can be expected in a designated period, based on trading actual results from the past power trading is disclosed (refer to PTL 1). In addition, for example, a technique of acquiring a prediction market price through a regression formula based on past weather actual result data, past empty capacity actual result data of an interconnection line that binds a plurality of supply areas, past power spot price actual result data, future weather prediction data, future empty capacity prediction data of the interconnection line that binds the plurality of supply areas, own company demand prediction data, and own company power generation facilities data is disclosed (refer to PTL 2).

US 2010/138363 A1 relates to assisting in the trading of electrical power.

Citation List

Patent Literature

    PTL 1: JP-A-2008-225755
    PTL 2: JP-A-2011-18375

Summary of Invention

Technical Problem

In the technique disclosed in PTL 1, for example, one day earlier is assumed as the closest past, and a price trend of the day is predicted from a price trend one day earlier (upward and downward trends) and assumed demand on the day. This technique is effective in a case where price fluctuation factors on the day and one day earlier are similar to each other, or in a case where demand on the day, which is a price fluctuation factor, is high. However, since there are a plurality of factors (a month, a day of the week, a temperature, market fragmentation, and the like), which are price fluctuation factors, a prediction error of price prediction occurs in a case where such factors are different from those of the previous day. As a result, a problem that economic trading cannot be carried out arises.

In the technique disclosed in PTL 2, when calculating a prediction market price through regression analysis, weather data is added as a regression coefficient, and also interconnection line empty capacity, which is power transmission capacity between a supply area, which is a bidding target, and another supply area, is set as an explanatory variable. Thus, if interconnection line empty capacity between related supply areas is high, power interchange is effective by that degree. Therefore, association, in which price fluctuations are suppressed or the like, is modeled. This technique is effective in a case where if interconnection line empty capacity is high, market participants continuously increase by the degree, and prices are suppressed due to competitive trading. However, in general, a change in the number of market participants occurs due to market fragmentation that occurs when a planned value of a power interchange amount between areas exceeds interconnection line empty capacity. In this case, the number of market participants discontinuously changes by the number of market participants within fragmented supply areas. As a result, regression different from the reality is performed, a prediction error of price prediction occurs, and a problem that economic trading cannot be carried out arises.

The present invention is devised by taking such a point into account, and an object thereof is to propose a power trading assistance device that provides information which can appropriately support power trading.

Solution to Problem

According to an aspect of the present invention, in order to solve such a problem, there is provided a power trading assistance device **as specified in claim 1.**

According to another aspect of the present invention, there is provided a market price prediction information generation method **as specified in claim 13.**

According to the present invention, a market price is predicted by taking behavior of a player and a power transportation path state into consideration. As described above, since effects of behavior of a player and a power transportation path state on a contract price are taken into account, the accuracy of price prediction improves, and economic trading becomes possible.

Advantageous Effects of Invention

According to the present invention, it is possible to provide information that can appropriately support power trading.

Brief Description of Drawings

[Fig. 1] Fig. 1 is a diagram showing a configuration example of a power trading assistance device according to a first embodiment.

[Fig. 2] Fig. 2 is a diagram showing a configuration example of the power trading assistance device according to the first embodiment.

[Fig. 3] Fig. 3 is a diagram showing a configuration example of a target area and an interconnection line according to the first embodiment.

[Fig. 4] Fig. 4 is a diagram showing a functional configuration example of a player behavior predicting unit, a market physical restriction predicting unit, and a market predicting unit according to the first embodiment.

[Fig. 5] Fig. 5 shows an example of a flow chart of profiling processing of a generator operation pattern according to the first embodiment.

[Fig. 6] Fig. 6 is a diagram showing an example of a generator operation prediction attribute information table according to the first embodiment.

[Fig. 7] Fig. 7 is a diagram showing a schematic configuration of a diagnosis determination tree TR according to the first embodiment.

[Fig. 8] Fig. 8 shows an example of a flow chart of diagnosis determination tree generation processing according to the first embodiment.

[Fig. 9] Fig. 9 shows an example of a flow chart of first diagnosis determination tree generation processing according to the first embodiment.

[Fig. 10] Fig. 10 shows an example of a flow chart of second diagnosis determination tree generation processing according to the first embodiment.

[Fig. 11] Fig. 11 is a diagram showing an example of a generator operation prediction attribute information prediction value table according to the first embodiment.

[Fig. 12] Fig. 12 is a diagram showing a functional overview of a power trading assistance device according to a second embodiment.

[Fig. 13] Fig. 13 is a diagram showing a configuration example of the power trading assistance device according to the second embodiment.

[Fig. 14] Fig. 14 is a diagram showing a functional configuration example of the power trading assistance device according to the second embodiment.

[Fig. 15] Fig. 15 is a diagram showing an example of a demand prediction information table according to the second embodiment.

[Fig. 16] Fig. 16 is a diagram showing an example of a generator information table according to the second embodiment.

[Fig. 17] Fig. 17 is a diagram showing an example of a generator planned stop information table according to the second embodiment.

[Fig. 18] Fig. 18 is a diagram showing an example of a supply capacity prediction information table according to the second embodiment.

[Fig. 19] Fig. 19 is a diagram showing an example of an interconnection line empty capacity information table according to the second embodiment.

[Fig. 20] Fig. 20 is a diagram showing an example of a market fragmentation prediction value table according to the second embodiment.

[Fig. 21] Fig. 21 is a diagram showing an example of a contract price actual result information table according to the second embodiment.

[Fig. 22] Fig. 22 is a diagram showing an example of an attribute information table according to the second embodiment.

[Fig. 23] Fig. 23 is an area price prediction value table according to the second embodiment.

[Fig. 24] Fig. 24 is a diagram showing an example of a bid determination value table according to the second embodiment.

[Fig. 25] Fig. 25 is a diagram showing an example of a market fragmentation actual result table according to the second embodiment.

[Fig. 26] Fig. 26 is a diagram showing an example of a market fragmentation pattern information table according to the second embodiment.

[Fig. 27] Fig. 27 is a diagram showing an example of a daily classification information table according to the second embodiment.

[Fig. 28] Fig. 28 shows an example of a flow chart of power trading assistance processing according to the second embodiment.

[Fig. 29] Fig. 29 shows an example of a flow chart of market fragmentation prediction processing according to the second embodiment.

[Fig. 30] Fig. 30 shows an example of a flow chart of market fragmentation pattern profiling processing according to the second embodiment.

[Fig. 31] Fig. 31 shows an example of a flow chart of diagnosis determination tree generation processing according to the second embodiment.

[Fig. 32] Fig. 32 shows an example of a flow chart of first diagnosis determination tree generation processing according to the second embodiment.

[Fig. 33] Fig. 33 shows an example of a flow chart of second diagnosis determination tree generation processing according to the second embodiment.

[Fig. 34] Fig. 34 shows an example of a flow chart of market price prediction processing according to the second embodiment.

[Fig. 35] Fig. 35 shows an example of a flow chart of bidding planning processing according to the second embodiment.

[Fig. 36] Fig. 36 is a diagram showing a schematic configuration of a diagnosis determination tree TR according to the second embodiment.

[Fig. 37] Fig. 37 is a diagram showing an example of an occurrence probability display screen according to the second embodiment.

[Fig. 38] Fig. 38 is a diagram showing a preparation example of a model price curve candidate according to the second embodiment.

[Fig. 39] Fig. 39 is a diagram showing a preparation example of a price prediction curve according to the second embodiment.

[Fig. 40] Fig. 40 is a diagram showing a correction example of the price prediction curve according to the second embodiment.

[Fig. 41] Fig. 41 shows an example of a flow chart of market fragmentation prediction processing according to a third embodiment.

Description of Embodiments

Hereinafter, embodiments of the present invention will be described in detail with reference to the drawings.

The embodiments to be described below are related to a bid planning technique of predicting a market price in a power trading market and formulating a highly economic bidding plan for an electric utility. The bid planning technique can solve a problem in which economic trading is not possible.

For example, in order to solve the problem in which economic trading is not possible, it is desirable to perform price prediction in which a plurality of factors to become a factor of a contract price, including an effect of market fragmentation having on the contract price, are taken into account. In recent years, a situation where market fragmentation frequently occurs arises in a spot market. Since market fragmentation leads to a change in market participants at the time of contract processing, it is considered to have an effect on final determination on an area price. That is, it is considered that a price range and fluctuate pattern of the area price receives an effect of how areas are divided in market fragmentation.

Thus, in the following embodiments, a method of predicting whether market fragmentation occurs and predicting a market price based on the prediction result will be mainly described.

(1) First Embodiment

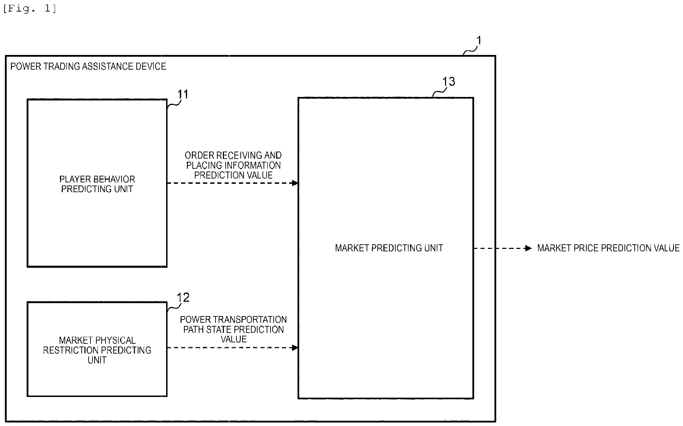

In Fig. 1, 1 indicates a power trading assistance device 1 in the embodiment as a whole. The power trading assistance device 1 calculates a market price prediction value based on an order receiving and placing information prediction value and a power transportation path state prediction value. Such a power trading assistance device 1 can devise a highly economic bidding plan. Details will be described below.

The power trading assistance device 1 is a calculator or the like, and is configured by including a central processing unit (CPU), storage devices, such as a read only memory (ROM), a random access memory (RAM), and a hard disk drive (HDD), and an input and output device (an example of a notifying device) such as a liquid crystal display. Various types of functions (respective units) are realized by the CPU reading and executing various types of programs stored in the storage devices.

Fig. 1 shows a configuration example of area price prediction made by the power trading assistance device 1. A player behavior predicting unit 11 of such a power trading assistance device 1 predicts behavior of a player (also referred to as a market participant) who participates in the market (calculates an order receiving and placing information prediction value). A market physical restriction predicting unit 12 predicts physical restrictions at the time of market formation, such as an interconnection line restriction (calculates a power transportation path state prediction value). A market predicting unit 13 predicts a market price to be determined in the end (calculates a market price prediction value).

The power trading assistance device 1 is not limited to a configuration of including the player behavior predicting unit 11, the market physical restriction predicting unit 12, and the market predicting unit 13. Another calculator may include the market physical restriction predicting unit 12, still another calculator may include the market predicting unit 13, and still another calculator may include the market physical restriction predicting unit 12 and the market predicting unit 13.

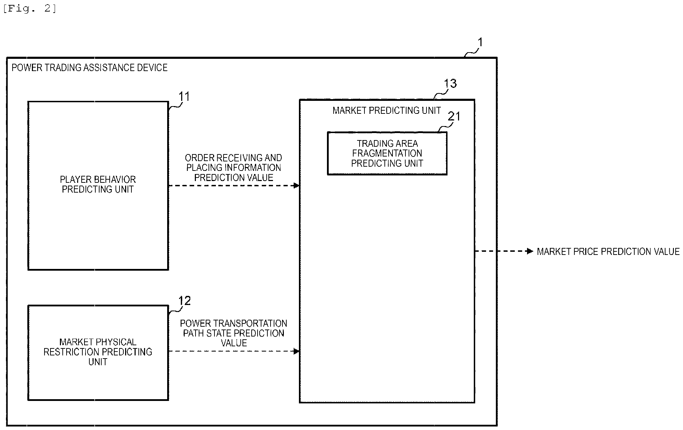

Herein, the market predicting unit 13 has a trading area fragmentation predicting unit 21 as shown in Fig. 2. The trading area fragmentation predicting unit 21 predicts whether market fragmentation between areas occurs from a market participant behavior prediction value (order receiving and placing information prediction value) and a physical restriction prediction value at the time of market formation (power transportation path state prediction value). Prediction of occurrence of market fragmentation between areas is carried out as follows. For example, a pattern of market fragmentation of a nationwide area, which is generated in the past, for each predetermined time is identified from an area price for each past area, an attribute, which is a factor of generating a market fragmentation pattern in each time range, is determined through market fragmentation pattern profiling processing, and a future market fragmentation pattern is predicted based on the profiling processing results and a predicted future attribute value.

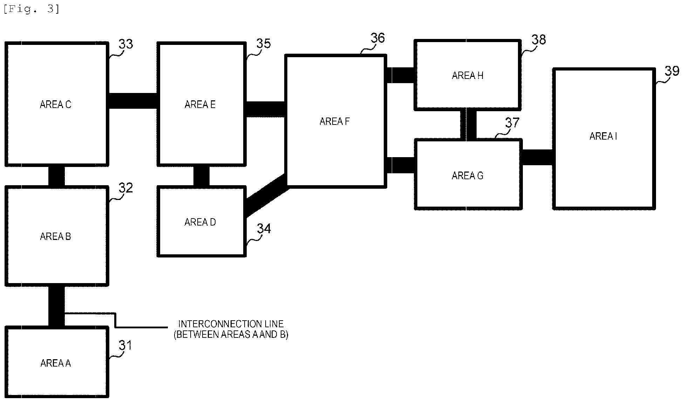

Herein, Fig. 3 shows a physical configuration example of a target area and an interconnection line. In Fig. 3, an area A 31 to an area I 39 are minimum area units in which area prices are determined. Each area can perform power interchange with an adjacent area within a range, in which the capacity of an interconnection line is not exceeded, through one or a plurality of (one, two, three, or four in the example) interconnection lines.

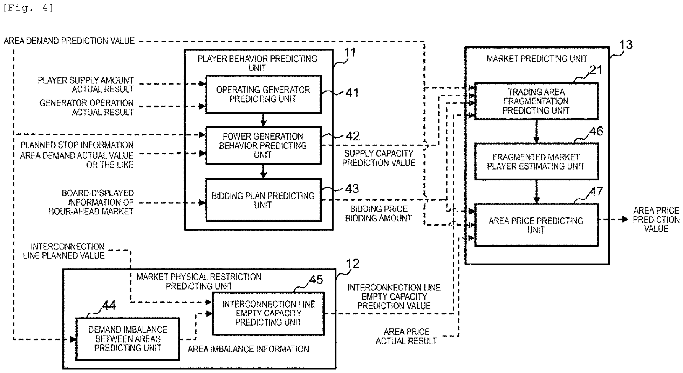

Fig. 4 is a diagram showing a functional configuration example of the player behavior predicting unit 11, the market physical restriction predicting unit 12, and the market predicting unit 13.

An operating generator predicting unit 41 estimates a generator of a market participant, which was operated in the past, from past supply amount actual results of the market participant and known past generator operation actual results (operation actual result information of a generator unit). For example, as for a past day when an operation actual result of a generator unit is unknown, supply amount actual results of that day is compared, through correlation analysis or the like, with supply amount actual results of past days when operation actual results of generator units are known, and operation actual results of a generator unit on a day when correlation is the highest is estimated as a generator operated on that day.

A power generation behavior predicting unit 42 predicts future suppliable electric energy of a market participant by predicting a generator to be operated by the market participant in the future based on past generator operation actual results, an estimated past generator operation estimation value, and other attribute information (an item and a value thereof) that can be a factor of power generation of the market participant including planned stop information (a past generator planned stop forecast value), a weather value actual value such as a temperature, and an area demand actual value.

For example, the power generation behavior predicting unit 42 defines a combination of operation/non-operation of each generator unit as a generator operation pattern, and determines an attribute, which is a factor of generating each generator operation pattern, through profiling processing of the generator operation pattern.

(1-1) Profiling Processing of Generator Operation Pattern

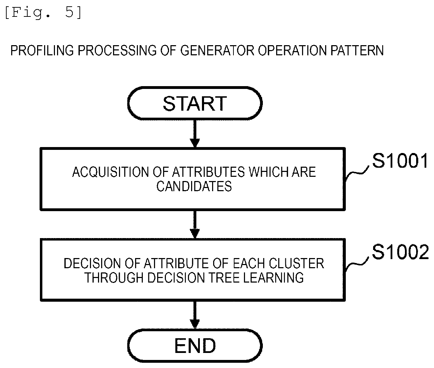

Fig. 5 shows an example of processing procedures of profiling processing of a generator operation pattern.

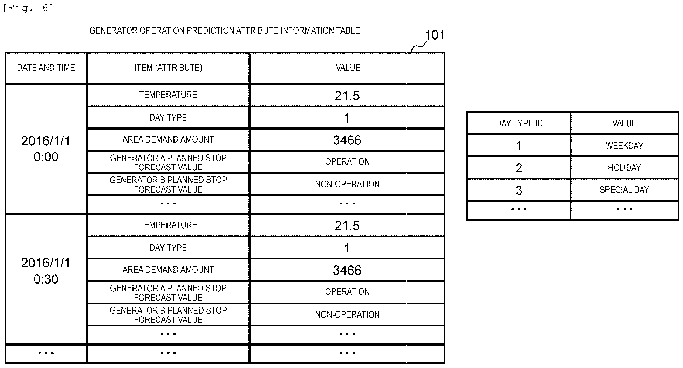

In profiling processing of a generator operation pattern, first, the power generation behavior predicting unit 42 reads attribute information (an item and a value thereof) which can become an attribute of a generator operation pattern from a generator operation prediction attribute information table 101 (Fig. 6) (Step S1001).

Next, the power generation behavior predicting unit 42 determines each dominant attribute for each generator operation pattern, for example, through diagnosis tree learning (determination tree learning), based on the read attribute information (Step S1002). The profiling processing is terminated by performing the processing described above.

Although Iterative Dichotomiser 3 (ID3) is used as an algorithm for preparing a diagnosis determination tree, which is used in such diagnosis tree learning, in the embodiment, algorithms other than ID3, such as C4.5, classification and regression trees (CART), and ID3-plural can also be applied.

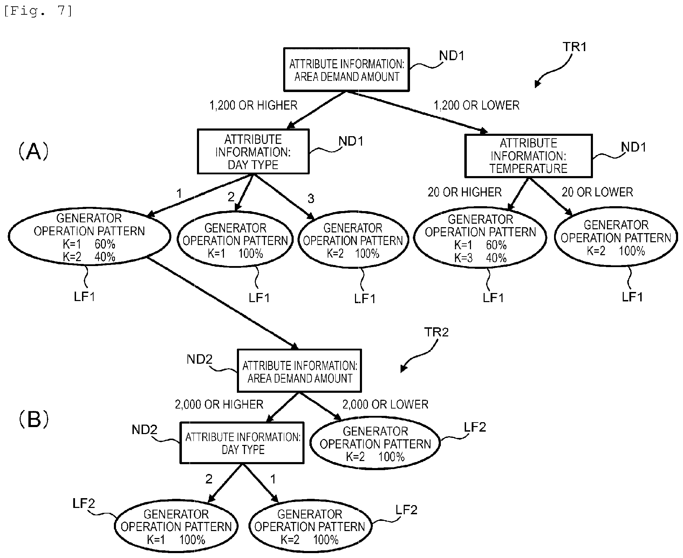

Herein, Fig. 7 is a schematic configuration of a diagnosis determination tree TR generated in the aforementioned profiling processing of a generator operation pattern. Processing of generating the diagnosis determination tree TR is processing for integrally generating the diagnosis determination tree TR for estimating each generator operation pattern related to each time frame based on attribute information of each time frame registered in the generator operation prediction attribute information table 101. Such a diagnosis determination tree TR is configured of one or a plurality of diagnosis determination trees TR (a first diagnosis determination tree TR1 and a second diagnosis determination tree TR2 in an example shown in Fig. 7).

The first diagnosis determination tree TR1 is a diagnosis tree prepared based on only attribute information corresponding to an analysis period, which is each time frame. In practice, in the first diagnosis determination tree TR1, content of each node ND1 is related to only attribute information of a time frame, which is recognized based on time-series position data, and each time frame can be associated with any generator operation pattern based on only attribute information of the time frame.

In addition, out of respective leaves LF1 of the first diagnosis determination tree TR1, a leaf LF1 representing a generator operation pattern, which is an allocation destination and is not clear (a generator operation pattern, which is an allocation destination, is not determined to be one), is set as a root, and time-series position data of an existing user allocated to the leaf LF1 for an analysis period, is analyzed, thereby obtaining supplementary information. The second diagnosis determination tree TR2 is a diagnosis tree prepared based on the supplementary information of the time frames (attribute information of a generator operation pattern to which the time frames belong). In practice, in the second diagnosis determination tree TR2, content of each node ND2 is related to only supplementary information of a time frame, and a time frame can be associated with any generator operation pattern based on the supplementary information.

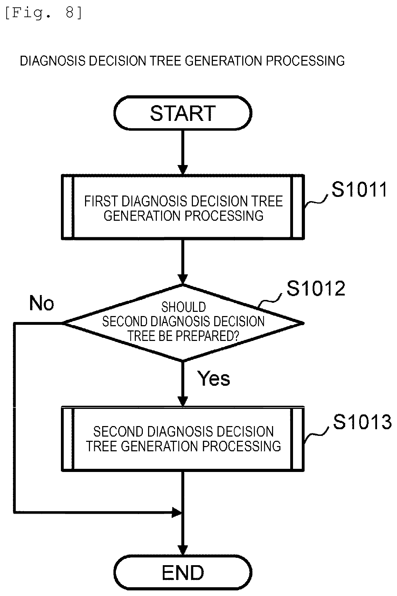

Fig. 8 shows an example of processing procedures of diagnosis determination tree generation processing executed in order to generate such a diagnosis determination tree TR.

When processing proceeds to Step S1002 of Fig. 5, the power generation behavior predicting unit 42 starts diagnosis determination tree generation processing shown in Fig. 8, and first, generates the first diagnosis determination tree TR1 with reference to the generator operation prediction attribute information table 101 (Step S1011).

Next, the power generation behavior predicting unit 42 determines whether or not the leaf LF1 representing a generator operation pattern, which is an allocation destination, is not determined to be one exists in the first diagnosis determination tree TR1 (whether or not to generate a second diagnosis determination tree) (Step S1012). When a negative result is obtained through this determination, then the power generation behavior predicting unit 42 terminates diagnosis determination tree generation processing.

On the other hand, when a positive result is obtained in the determination of Step S1012, the power generation behavior predicting unit 42 generates the second diagnosis determination tree TR2 with reference to the generator operation prediction attribute information table 101 (Step S1013), and terminates the diagnosis determination tree generation processing.

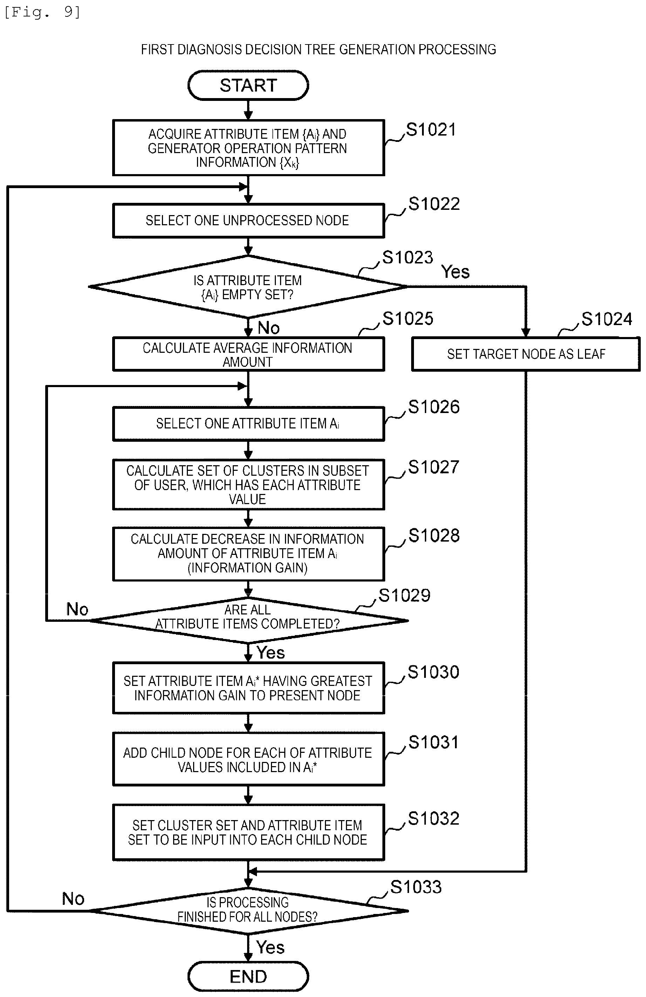

Fig. 9 shows an example of processing procedures of first diagnosis determination tree generation processing executed in Step S1011 of the diagnosis determination tree generation processing.

When processing proceeds to Step S1011 of the diagnosis determination tree generation processing, the power generation behavior predicting unit 42 starts the first diagnosis determination tree generation processing of Fig. 9, and first, acquires generator operation pattern information (cluster set) $\{X_k\}$ obtained through identification of the generator operation pattern described above and an attribute item $\{A_i\}$ of each time frame (Step S1021).

Next, the power generation behavior predicting unit 42 selects one unprocessed node (Step S1022). Since processing after Step S1022 starts from a root (top node) of the diagnosis determination tree TR intended to be generated at that time, a root is selected in Step S1022 to be executed for the first time.

Next, the power generation behavior predicting unit 42 determines whether or not the attribute item $\{A_i\}$ of a user, which was acquired in Step S1021 is an empty set (Step S1023). When a positive result is obtained in this determination, then, the power generation behavior predicting unit 42 takes processing to Step S1033 after setting the node selected in Step S1022 as a leaf (a terminal node) (Step S1024).

On the other hand, when a negative result is obtained in the determination of Step S1023, the power generation behavior predicting unit 42 calculates an average information amount H of all generator operation patterns of a user, which are included in the present generator operation pattern information, through the following equation (1A) (Step S1025). In the equation (1A), $|X_k|$ indicates the number of users included in a generator operation pattern k.

$$H(\{X_k\}) = -\sum_k (|X_k| / \sum_n |X_n|) \log(|X_k| / \sum_n |X_n|)$$

The average information amount H ($|X_k|$) takes a high value if variation in a generator operation pattern, to which input time-series position data of a user belongs, is great, and takes a low value in a case where a deviation is great. In a case where each input time-series position data of each user belongs to only one generator operation pattern, the average information amount becomes "0".

Next, the power generation behavior predicting unit 42 selects one unprocessed attribute item $A_i$ from the input attribute item $\{A_i\}$ (Step S1026), and calculates a generator operation pattern set $\{Y_k, j\}$ in a subset of a user, which has values ($a_i$, 1, $a_i$, 2, $a_i$, 3, ...) included in the selected the attribute item $A_i$, as attribute values and the number of users thereof $|Y_k, j|$ (Step S1027).

Next, as for the attribute item $A_i$ selected in Step S1026, the power generation behavior predicting unit 42 calculates an information gain IG ($A_i$) through the following the equation (1B) (Step S1028). The information gain IG ($A_i$) is a parameter indicating how much variation in a belonging generator operation pattern decreases in a case where users are partially divided by an attribute value ($a_i$, 1, $a_i$, 2, $a_i$, 3, ...).

$$IG(A_i) = H(\{X_k\}) - \sum_j \sum_k (|Y_{k,j}| / \sum_n |Y_{n,j}|) \log((|Y_{k,j}| / \sum_n |Y_{n,j}|)$$

Next, the power generation behavior predicting unit 42 determines whether or not the calculation of the information gain IG ($A_i$) is finished for all the input attribute items $\{A_i\}$ (Step S1029). Then, the power generation behavior predicting unit 42 returns to Step S1026 when a negative result is obtained in this determination, and repeats processing of Step S1026 to Step S1029 while sequentially switching the attribute item $A_i$ selected in Step S1026 to another unprocessed node.

When a positive result is obtained in Step S1029 by finishing the calculation of the information gain IG ($A_i$) for all the attribute items $\{A_i\}$, then, the power generation behavior predicting unit 42 sets an attribute item $A_i^*$ having the greatest information gain IG ($A_i$) to the present node of the diagnosis determination tree TR (Step S1030), and prepares a child node for each of attribute values ($a_i^*$, 1, $a_i^*$, 2, $a_i^*$, 3, ...) of the attribute item $A_i^*$ (Step S1031).

Next, the power generation behavior predicting unit 42 sets a cluster set and an attribute item set to be input into each child node (Step S1032). More specifically, as for the attribute values ($a_i^*$, 1, $a_i^*$, 2, $a_i^*$, 3, ...) of the aforementioned attribute item $A_i^*$, the power generation behavior predicting unit 42 associates a generator operation pattern subset $\{Y_k, j\}$ for a time frame having an attribute value ($a_i^*$,j) as new generator operation pattern information $\{X_k\}$ with respect to a corresponding child node. In addition, the power generation behavior predicting unit 42 associates a subset $\{A_i/A_i^*\}$ of an attribute item excluding the aforementioned attribute item $A_i^*$ having the greatest information gain IG ($A_i$) as a new attribute item $\{A_i\}$ with respect to each child node.

Next, the power generation behavior predicting unit 42 determines whether or not the execution of processing of Step S1023 to Step S1032 is finished for all nodes (Step S1033). Then, the power generation behavior predicting unit 42 returns to Step S1022 when a negative result is obtained in this determination, and repeats processing of Step S1022 to Step S1033 while sequentially switching the node selected in Step S1022 to another unprocessed node.

When a positive result is obtained in Step S1033 by finishing the determination of attribute information $A_i^*$ for all nodes, then, the power generation behavior predicting unit 42 terminates the first diagnosis determination tree generation processing.

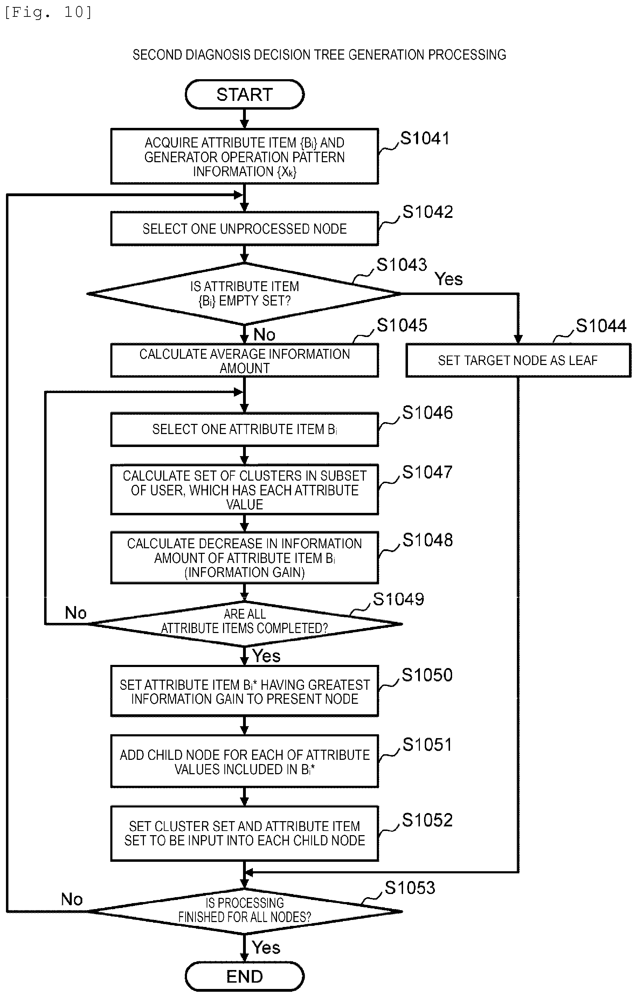

Fig. 10 shows an example of processing procedures of second diagnosis determination tree generation processing executed in Step S1013 of the diagnosis determination tree generation processing (Fig. 8). The second diagnosis determination tree generation processing shown in Fig. 10 is executed when preparing the second diagnosis determination tree TR2 with supplementary information of a time frame set as an attribute item $\{B_i\}$ as for the leaf LF1 representing a generator operation pattern, which is an allocation destination and is not clear (a generator operation pattern, which is an allocation destination, is not determined to be one), out of the respective leaves LF1 of the first diagnosis determination tree TR1 generated in the first diagnosis determination tree generation processing described above with reference to Fig. **9.**

Since processing content of Step S1041 to Step S1053 of the second diagnosis determination tree generation processing is the same as Step S1021 to Step S1033 of the first diagnosis determination tree generation processing described above with reference to Fig. 9 except for the fact that supplementary information is set as an input item, description thereof will be omitted.

Although a case where ID3 is used in the first diagnosis determination tree generation processing described above and the second diagnosis determination tree generation processing described above is described, any method may be used insofar as it is a method of generating a determination tree that allows diagnosing a generator operation pattern, and a method of generating different diagnosis determination trees may be used as a method of generating the first and second diagnosis determination trees TR1 and TR2.

(1-2) Generator Operation Pattern Prediction Processing in Which Attribute Prediction Value Is Used

Processing content of predicting a generator operation pattern of each future time frame based on attribute information of a time frame, which is a prediction target, will be described.

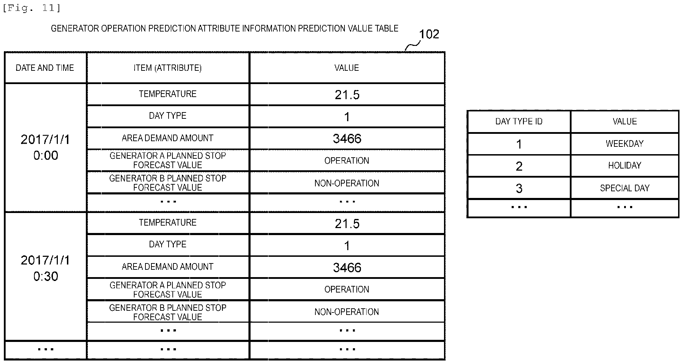

In this case, first, the power generation behavior predicting unit 42 determines a generator operation pattern for each time frame based on attribute information identified for each time frame with reference to a diagnosis determination tree, which is prepared through profiling processing of a generator operation pattern, and a generator operation prediction attribute information prediction value table 102 (Fig. 11) in which an attribute prediction value of a future time frame is stored.

More specifically, the power generation behavior predicting unit 42 compares a dominant attribute of a time frame which belongs to a certain generator operation pattern in a diagnosis determination tree with an attribute predicted in a time frame, which is a prediction target, and determines a generator operation pattern, in which the number of matching attributes is equal to or higher than a threshold value (matching attribute item number threshold value) set in advance, as a generator operation pattern of that time frame.

Through processing of (1-1) and (1-2) described above, the power generation behavior predicting unit 42 predicts a generator operation pattern, and predicts (estimates) a supply limit amount from an output of a starting generator.

In addition, as another method for the power generation behavior predicting unit 42, future suppliable electric energy for each area may be predicted based on a generator operation prediction value on the day and generator planned stop information. For example, the power generation behavior predicting unit 42 excludes a generator scheduled to undergo planned stop from generators of generator operation prediction values, and estimates a supply limit amount from outputs of remaining generators.

Next, as shown in Fig. 4, a bidding plan predicting unit 43 predicts a bidding price and a bidding amount offered by a market participant in the future spot market based on a prediction value of future suppliable electric energy of a market participant (a supply capacity prediction value) and information of a bidding price and a bidding amount in the past hour-ahead market (board-displayed information of the hour-ahead market). For example, a value obtained by multiplying a value, which is obtained by subtracting a past bidding amount in the hour-ahead market from a supply amount actual value of a market participant in a past time frame, by a predetermined coefficient is predicted as a bidding amount in the spot market.

A demand imbalance between areas predicting unit 44 predicts, from an area demand prediction value of each area, how a total amount of power interchanged between areas changes in the course of time. For example, the demand imbalance between areas predicting unit may calculate an area demand average value of past days for each area, and predict power interchange between areas from information of a difference between an area demand prediction value and the average value.

An interconnection line empty capacity predicting unit 45 predicts interconnection line empty capacity (capacity indicating power transmission capacity between areas) on the day based on an interconnection line planned value and a power interchange between areas prediction value (area imbalance information). For example, interconnection line empty capacity for each hour is predicted by subtracting a power interchange prediction value from empty capacity in the interconnection line planned value.

The trading area fragmentation predicting unit 21 predicts whether market fragmentation between areas occurs from an area demand prediction value, a supply capacity prediction value of each area, a prediction value of a bid (a bidding price and a bidding amount) for each area, and an interconnection line empty capacity prediction value.

A fragmented market player estimating unit 46 finds out, for each set of areas after fragmentation, a market participant who belongs to that area from predicted occurrence of market fragmentation between respective areas.

An area price predicting unit 47 calculates an area price prediction value of an area after fragmentation by executing simulation of contract processing from a bidding price prediction value of a market participant in an area after fragmentation. In addition, as another means, area price may be predicted through determination tree learning with an area demand prediction value, a past area price actual value, or the like as an attribute value, as will be described later in a second embodiment.

Herein, the power trading assistance device 1 may notify a user of a prediction result of market fragmentation from the trading area fragmentation predicting unit 21. The notification may be screen display, may be printing on a paper medium, may be image projection, or may be output through another output method. The power trading assistance device 1 may notify a user of an area price prediction value predicted by the area price predicting unit 47.

(1-3) Effects of the Embodiment

As described above, the power trading assistance device 1 of the embodiment collects an order receiving and placing information prediction value and a power transportation path state prediction value when formulating a bidding plan for the power trading market, predicts whether market fragmentation occurs based on the collected environment information, and predicts an area price based on the prediction result.

Therefore, even in a case where a price range of an area price fluctuates according to how areas are divided by market fragmentation, the power trading assistance device 1 can predict whether market fragmentation between respective areas occurs from environment information that can be acquired, and can take into account an effect of occurrence of market fragmentation on a contract price through price prediction, in which an effect of predicted occurrence of market fragmentation is taken into account. Accordingly, price prediction accuracy can be improved, and power trading support of devising a highly economic bidding plan can be realized.

(2) Second Embodiment

An example of predicting whether market fragmentation occurs and an example of calculating an area price prediction value with the use of a method that is different from a prediction method of the first embodiment and devising a bidding plan based on a result of area price prediction will be mainly described in the embodiment.

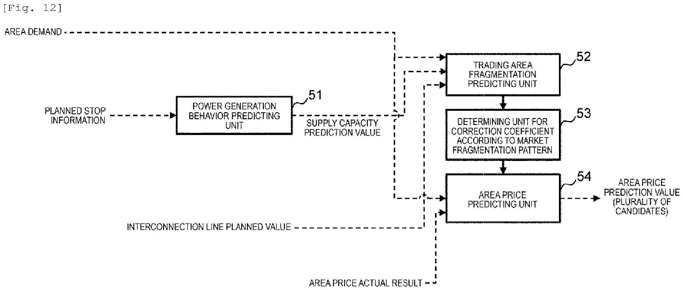

Fig. 12 is a diagram showing a functional configuration example of a power trading assistance device 60, which is obtained by modifying the functional configuration example of Fig. 4. In the configuration example, the market predicting unit 13 shown in Fig. 4 is configured by a trading area fragmentation predicting unit 52, a determining unit 53 for a correction coefficient according to a market fragmentation pattern, and an area price predicting unit 54. The power trading assistance device 60 includes a power generation behavior predicting unit 51, the trading area fragmentation predicting unit 52, the determining unit 53 for a correction coefficient according to a market fragmentation pattern, and the area price predicting unit 54. The power generation behavior predicting unit 51 calculates a supply capacity prediction value based on planned stop information or the like. The trading area fragmentation predicting unit 52 predicts presence or absence of market fragmentation (market fragmentation pattern) based on area demand, a supply capacity prediction value, and an interconnection line planned value. The determining unit 53 determines a correction coefficient according to a market fragmentation pattern. The area price predicting unit 54 calculates an area price prediction value based on area demand, an area price actual result, and a correction coefficient.

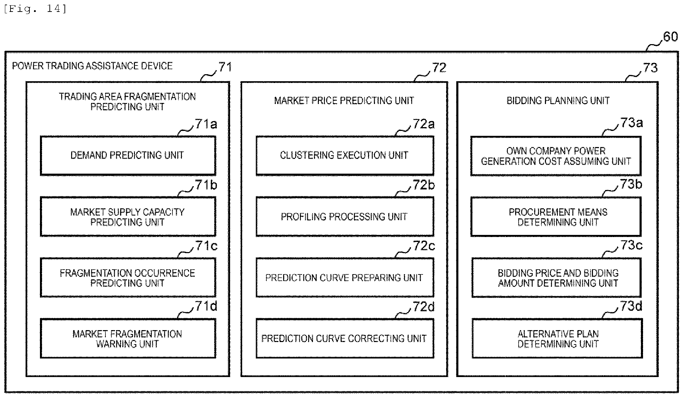

The trading area fragmentation predicting unit 52 is configured of a fragmentation occurrence predicting unit 71c shown in Fig. 14, which is to be described later. The determining unit 53 for a correction coefficient according to a market fragmentation pattern is configured of a prediction curve correcting unit 72d shown in Fig. 14, which is to be described later. The area price predicting unit 54 is configured of a clustering execution unit 72a, a profiling processing unit 72b, and a prediction curve preparing unit 72c shown in Fig. 14, which are to be described later. Hereinafter, details of each unit will be described.

(2-1) Configuration of Power Trading Assistance Device 60

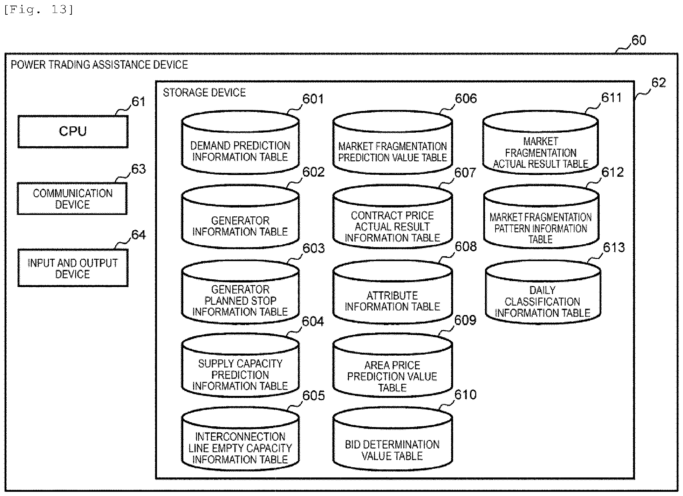

As shown in Fig. 13, the power trading assistance device 60 includes a CPU 61, a storage device 62, a communication device 63, an input and output device 64, and the like. The power trading assistance device 60 may be a local server provided in a particular place, or may be a client server.

The CPU 61 is a processor in charge of operation control of the overall power trading assistance device 60. The storage device 62 is configured of a semiconductor memory or the like, and is mainly used in order to store and retain various types of programs and various types of tables (tables 601 to 613 and the like). In the embodiment, various types of processing of the power trading assistance device 60 to be described later are executed by the CPU 61 executing a program stored in the storage device 62.

The communication device 63 is a device that performs communication with an external terminal in a communication method conforming to a predetermined communication standard. The input and output device 64 is configured of an input device and an output device. The input device is hardware for a user to perform various types of operation inputs, and for example, a keyboard, a mouse, a touch panel, or the like is applied thereto. In addition, the output device is an example of a notifying device, and is hardware that outputs an image, voice, or the like. For example, a liquid crystal display, a speaker, or the like is applied thereto.

(2-2) Function of Power Trading Assistance Device 60

A power trading assistance function of the power trading assistance device 60 will be described. The power trading assistance function is a function of predicting whether market fragmentation occurs based on an interconnection line empty capacity planned value, an area demand prediction value, a supply capacity prediction value, and other environment information (attribute information or the like), predicting an area price based on the occurrence of market fragmentation and a past price actual result, determining power procurement means for each hour based on the predicted occurrence of market fragmentation and the area price, and the like.

As means for realizing such a power trading assistance function, a program for functioning as a trading area fragmentation predicting unit 71, a market price predicting unit 72, and a bidding planning unit 73 is stored in the storage device 62 of the power trading assistance device 60 as shown in Fig. 14. In addition, as shown in Fig. 13, a demand prediction information table 601, a generator information table 602, a generator planned stop information table 603, a supply capacity prediction information table 604, an interconnection line empty capacity information table 605, a market fragmentation prediction value table 606, a contract price actual result information table 607, an attribute information table 608, an area price prediction value table 609, a bid determination value table 610, a market fragmentation actual result table 611, a market fragmentation pattern information table 612, and a daily classification information table 613 are stored as tables for managing necessary information (may be stored in one database, may be stored in a plurality of databases, or may be stored through another technique).

The trading area fragmentation predicting unit 71 is realized by a program that causes the trading area fragmentation predicting unit to predict whether market fragmentation occurs in each area, and includes a demand predicting unit 71a, a market supply capacity predicting unit 71b, the fragmentation occurrence predicting unit 71c, and a market fragmentation warning unit 71d.

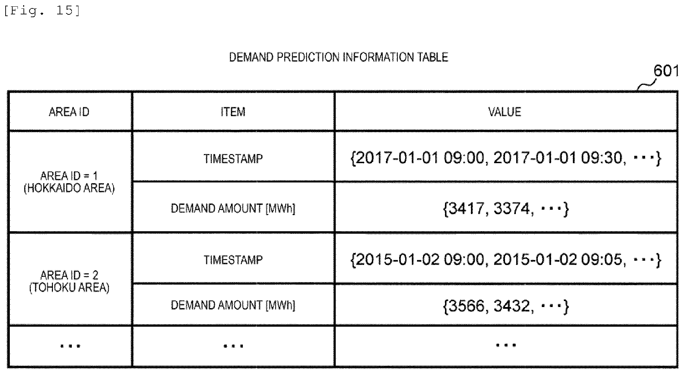

The demand predicting unit 71a is realized by a module that causes the demand predicting unit to predict a future demand amount for each area (for example, a total demand amount). A future demand amount predicted for each area by the demand predicting unit 71a is managed by being stored in the demand prediction information table 601 shown in Fig. 15.

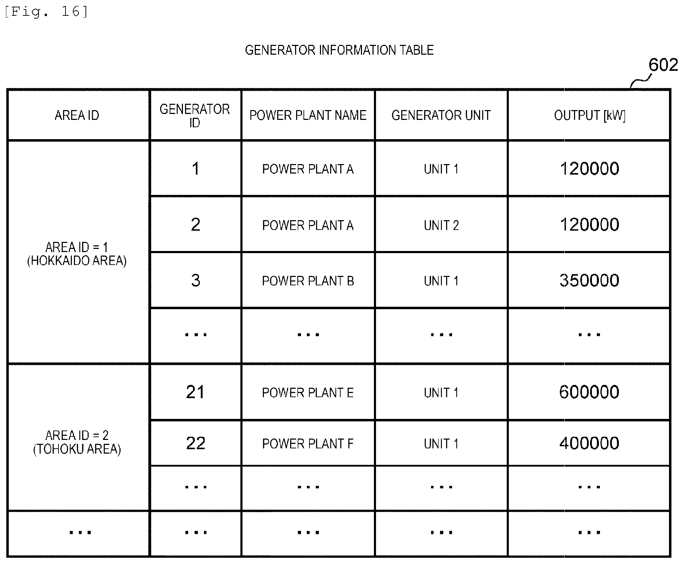

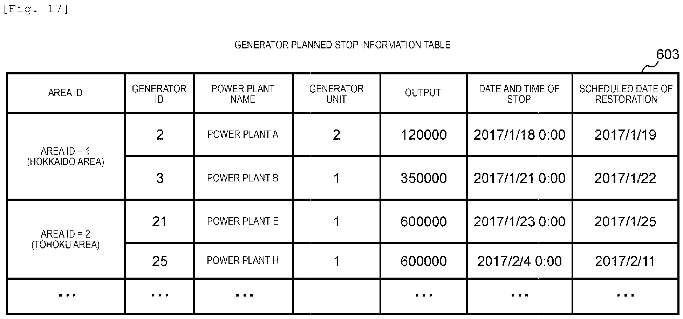

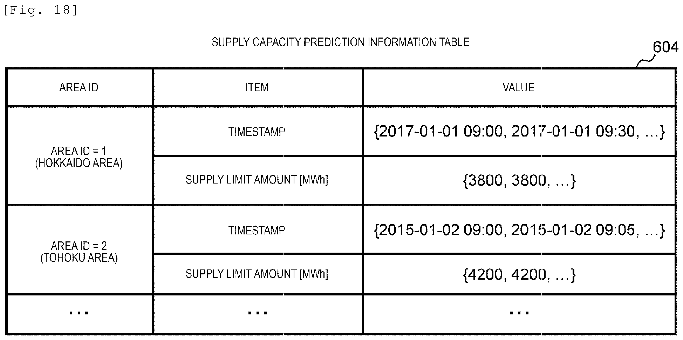

The market supply capacity predicting unit 71b is realized by a module that causes the market supply capacity predicting unit to predict suppliable electric energy (supply capacity) for each area in the future based on data of the generator information table 602 shown in Fig. 16 and the generator planned stop information table 603 shown in Fig. 17. A future supply capacity predicted by the market supply capacity predicting unit 71b is managed by being stored in the supply capacity prediction information table 604 shown in Fig. 18.

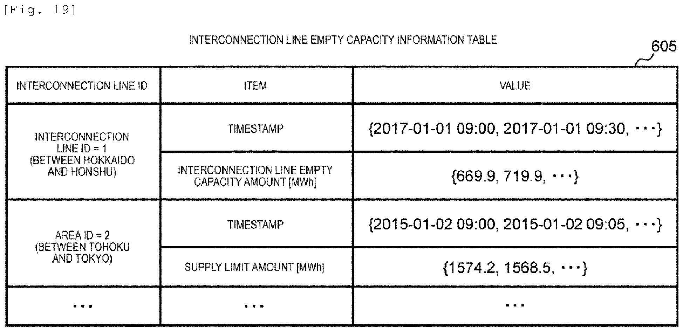

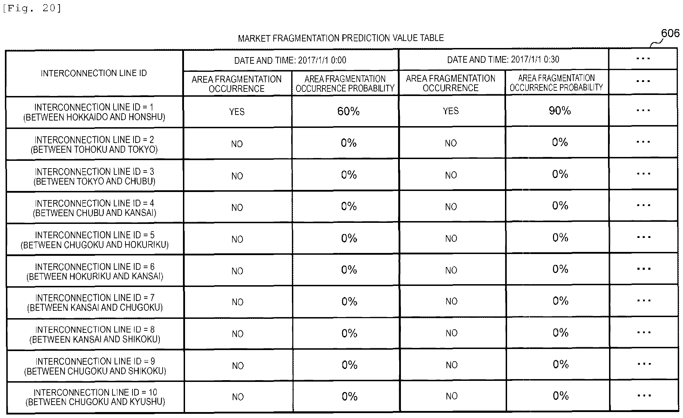

The fragmentation occurrence predicting unit 71c is realized by a module that causes the fragmentation occurrence predicting unit to predict whether market fragmentation between areas occurs based on a future demand amount predicted for each area by the demand predicting unit 71a, a future supply amount predicted by the market supply capacity predicting unit 71b, and data of the interconnection line empty capacity information table 605 shown in Fig. 19. Occurrence of market fragmentation between areas predicted by the trading area fragmentation predicting unit 71c is managed by being stored in the market fragmentation prediction value table 606 shown in Fig. 20.

The market fragmentation warning unit 71d is realized by a module that causes the market fragmentation warning unit to notify (for example, warn) a user of probability of the prediction of occurrence of market fragmentation turning out to be right or wrong via the input and output device 64 based on a prediction result of occurrence of market fragmentation between areas from the fragmentation occurrence predicting unit 71c.

The market price predicting unit 72 is realized by a program that causes the market price predicting unit to predict a future contract price based on past contract price data of the market, and includes the clustering execution unit 72a, the profiling processing unit 72b, the prediction curve preparing unit 72c, and the prediction curve correcting unit 72d.

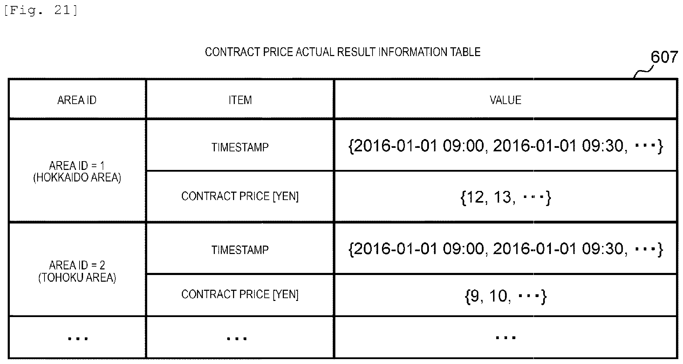

The clustering execution unit 72a is realized by a module that causes the clustering execution unit to execute clustering processing of classifying time-series data of a contract price for each day into a plurality of clusters based on data of the contract price actual result information table 607 shown in Fig. 21. The clustering execution unit 72a stores processing results of such clustering processing into a predetermined region of the storage device 62.

The profiling processing unit 72b is realized by a module that causes the profiling processing unit to execute profiling processing of estimating and determining a dominant attribute of each day that belongs to that cluster as for each cluster, which is time-series data generated by the clustering execution unit 72a.

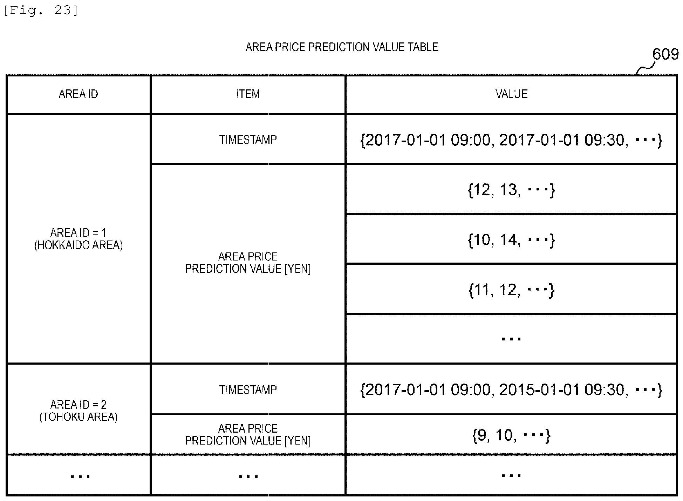

The prediction curve preparing unit 72c is realized by a module that causes the prediction curve preparing unit to predict an area price for each hour of a prediction target day (an example of a prediction target period) based on processing results of the clustering execution unit 72a and processing results of the profiling processing unit 72b. The prediction curve preparing unit 72c stores the processing result of such prediction processing into the area price prediction value table 609 shown in Fig. 23.

The prediction curve correcting unit 72d is realized by a module that causes the prediction curve correcting unit to correct an area price for each hour of a prediction target day based on a processing result of the trading area fragmentation predicting unit 71 and a processing result of the prediction curve preparing unit 72c. The prediction curve correcting unit 72d stores the processing result of such prediction processing into the area price prediction value table 609 shown in Fig. 23.

The bidding planning unit 73 is realized by a program that causes the bidding planning unit to devise a bidding plan in the market, and includes an own company power generation cost assuming unit 73a, a procurement means determining unit 73b, a bidding price and bidding amount determining unit 73c, and an alternative plan determining unit 73d.

The own company power generation cost assuming unit 73a is realized by a module that causes the own company power generation cost assuming unit to assume a power procurement unit price (own company power generation costs) in a case where own company has power generation facilities and own company has generated power.

The procurement means determining unit 73b is realized by a module that causes the procurement means determining unit to determine power procurement means for each hour based on own company power generation costs assumed by the own company power generation cost assuming unit 73a, occurrence of market fragmentation predicted by the trading area fragmentation predicting unit 71, and a future contract price predicted by the market price predicting unit 72.

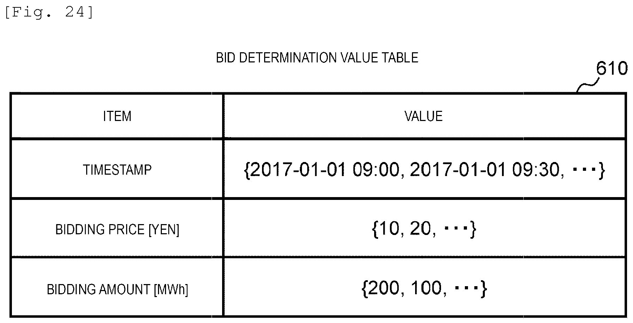

The bidding price and bidding amount determining unit 73c is realized by a module that causes the bidding price and bidding amount determining unit to determine a bidding amount and a bidding price for each hour in the market based on power procurement means of each time range which is determined by the procurement means determining unit 73b and a future contract price predicted by the market price predicting unit 72. The bidding price and bidding amount determining unit 73c stores a processing result of such bidding price and bidding amount determining processing into the bid determination value table 610 shown in Fig. 24.

The alternative plan determining unit 73d is realized by a module that causes the alternative plan determining unit to devise a bidding plan in which a case where prediction of occurrence of market fragmentation calculated by the trading area fragmentation predicting unit 71 turns out to be wrong is assumed. The bidding amount determining unit 73c stores a processing result of such alternative plan devising processing into the bid determination value table 610 shown in Fig. 24.

(2-3) Power Trading Assistance Processing of Power Trading Assistance Device 60 (Market Price Prediction Information Generation Method)

Processing content of various types of processing executed by the power trading assistance device 60 will be described. Although processing entities of the various types of processing will be described as respective units in the following, in practice, it is evident that the CPU 61 executes the processing based on a program or a module thereof.

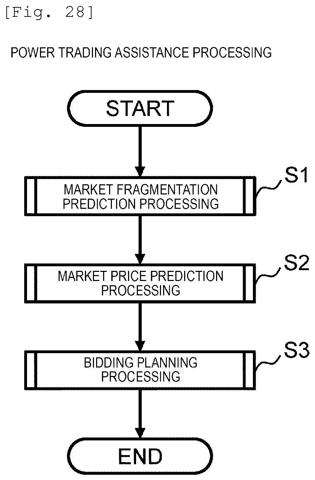

Fig. 28 shows an example of processing procedures of a series of processing (power trading assistance processing) of the power trading assistance device 60. Power trading assistance processing is executed periodically (for example, one day cycle).

When power trading assistance processing starts, first, the trading area fragmentation predicting unit 71 predicts a demand amount and supply capacity for each area in future time, and performs area fragmentation prediction processing of predicting whether market fragmentation between areas occurs in the power market based on the predicted area demand amount, the predicted supply capacity, and planned value data of interconnection line empty capacity (interconnection line empty capacity planned value) and processing of warning a user of whether there is occurrence of market fragmentation (Step S1). When such series of processing (market fragmentation prediction processing) is terminated, the trading area fragmentation predicting unit 71 starts the market price predicting unit 72.

The market price predicting unit 72 acquires accumulated time-series contract price data for each day for a fixed period (for example, one year), classifies time-series position data into a plurality of clusters (that is, classifies a contract price pattern for each day into a plurality of clusters) with the use of a feature amount of time-series position data for each day, executes profiling processing of determining a dominant attribute for each day allocated to each cluster, and executes preparation processing of preparing a price prediction curve for each day based on a future attribute value for each day and profiling processing results and correction processing of correcting the price prediction curve with the use of a prediction result of occurrence of market fragmentation (Step S2). When such series of processing (market price prediction processing) is terminated, then the market price predicting unit 72 notifies the bidding planning unit 73 of the termination.

When the notification of the termination of the market price prediction processing is given from the market price predicting unit 72, the bidding planning unit 73 executes bidding planning processing of assuming a power procurement unit price for each hour in a case where power is generated by own company, determining power procurement means and a bidding amount for each hour based on assumed own company power generation costs, predicted occurrence of market fragmentation, and a predicted future contract price, and devising a bidding plan in which a case where prediction occurrence of market fragmentation turns out to be wrong is assumed (Step S3). In addition, after then, the bidding planning unit 73 executes the bidding planning processing for each predetermined time (for example, for every few hours) or for each default time.

(A) Market Fragmentation Prediction Processing

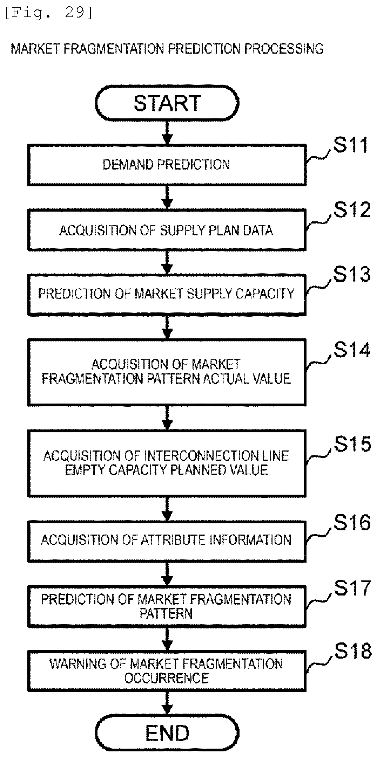

Fig. 29 shows an example of processing procedures of market fragmentation prediction processing executed by the trading area fragmentation predicting unit 71 in Step S1 of Fig. 28.

In market fragmentation prediction processing, first, the demand predicting unit 71a predicts a future demand amount for each area. In the prediction of a future demand amount, the demand predicting unit 71a acquires, for example, accumulated time-series demand amount data for each day of each area for a past period (for example, for one year), statistically analyzes an attribute (a temperature, humidity, a day of the week, or the like), which is an occurrence factor of a demand curve for each day (a temperature, humidity, a day of the week, or the like), and predicts a demand amount per unit time (for example, every 30 minutes) of future time based on a factor analysis result and an attribute of a prediction target day. The demand predicting unit 71a stores predicted future demand amount data into the demand prediction information table 601 (Step S11). Then, the demand predicting unit 71a calls the market supply capacity predicting unit 71b.

When the market supply capacity predicting unit 71b is started by the demand predicting unit 71a, first, the market supply capacity predicting unit 71b acquires data of the generator information table 602 and data of the generator planned stop information table 603, which are supply plan data of future time (Step S12).

Next, the market supply capacity predicting unit 71b assumes a future supply amount (a supply limit amount) of each area in future time based on generator information of each area stored in the generator information table 602 and generator stop information of each area stored in the generator planned stop information table 603. The market supply capacity predicting unit 71b stores an assumed future supply limit amount into the supply capacity prediction information table 604 (Step S13).

For example, the generator information table 602 stores information of an output of each unit of a power plant for each area. In addition, the generator planned stop information table 603 stores information of a generator unit scheduled to undergo planned stop for each area. That is, the market supply capacity predicting unit 71b identifies a generator which has started at prediction target time based on the two pieces of information, and estimates a supply limit amount at the prediction target time.

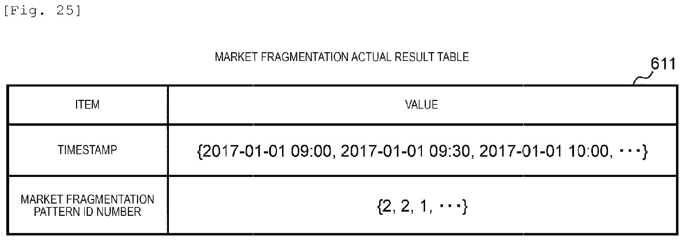

Next, the fragmentation occurrence predicting unit 71c acquires data of the market fragmentation actual result table 611 (Fig. 25), which is an actual result of a past market fragmentation pattern between respective areas (a market fragmentation pattern actual value) (Step S14).

Next, the fragmentation occurrence predicting unit 71c acquires data of the interconnection line empty capacity information table 605, which is an empty capacity planned value of an interconnection line between respective areas (Step S15) .

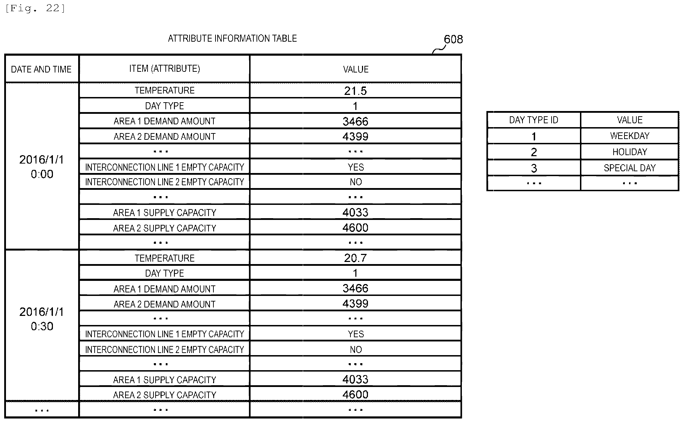

Next, the fragmentation occurrence predicting unit 71c acquires data of the attribute information table 608 (Fig. 22), which is attribute information (actual values and future prediction values of a day type, a temperature, humidity, demand, interconnection line empty capacity, supply capacity, and the like) (Step S16).

Then, the fragmentation occurrence predicting unit 71c executes prediction of a market fragmentation pattern based on future demand amount data, future supply limit amount, data of the market fragmentation actual result table 611, data of the interconnection line empty capacity information table 605, and data of the attribute information table 608 (Step S17).

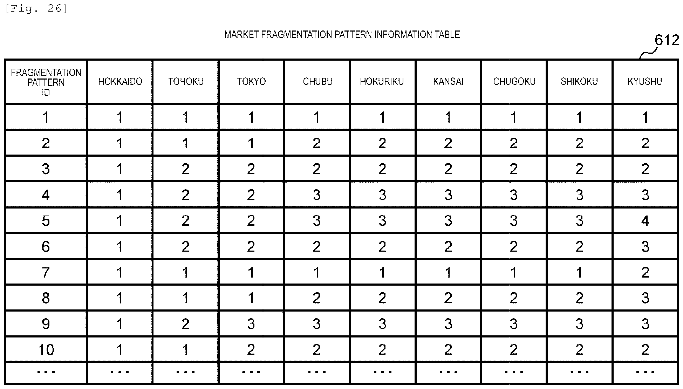

More specifically, the fragmentation occurrence predicting unit 71c identifies a market fragmentation pattern of a nationwide area for each predetermined time (every 30 minutes, in the example), which is generated from an area price for each first past area in the past. The identification of a market fragmentation pattern is performed as follows. For example, past area prices of respective areas are compared with each other, and it is considered that market fragmentation has occurred between areas having different area prices, thereby identifying a pattern of fragmentation. A market fragmentation pattern is associated with a fragmentation pattern ID, and is saved, for example, in a format shown in the market fragmentation pattern information table 612 (Fig. 26). Herein, numbers in the table indicate types of areas after area fragmentation, and the same number indicates that the number of areas is the same after area fragmentation. For example, a fragmentation pattern ID = "2" indicates that area fragmentation has occurred only between Tokyo and Chubu. Then, the fragmentation occurrence predicting unit 71c stores (records) the fragmentation pattern ID of the identified market fragmentation pattern as a market fragmentation actual result for each hour, for example, in a format shown in the market fragmentation actual result table 611.

Next, the fragmentation occurrence predicting unit 71c determines an attribute, which is a factor of generating each market fragmentation pattern, through market fragmentation pattern profiling processing.

(A-1) Market Fragmentation Pattern Profiling Processing

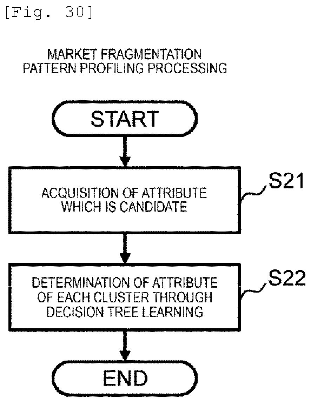

Fig. 30 shows an example of processing procedures of market fragmentation pattern profiling processing.

In the profiling processing, first, the fragmentation occurrence predicting unit 71c reads attribute information (an item and a value thereof) which can become an attribute of a market fragmentation pattern from the demand prediction information table 601, the supply capacity prediction information table 604, the market fragmentation actual result table 611, the interconnection line empty capacity information table 605, and the attribute information table 608 (Step S21).

Next, the fragmentation occurrence predicting unit 71c determines each dominant attribute for each market fragmentation pattern through, for example, diagnosis tree learning based on the read attribute information (Step S22). The market fragmentation pattern profiling processing is terminated by performing the processing described above.

Although Iterative Dichotomiser 3 (ID3) is used as an algorithm for preparing a diagnosis determination tree as described below, which is used in such diagnosis tree learning, in the embodiment, algorithms other than ID3, such as C4.5, classification and regression trees (CART), ID3-plural, or the like can also be applied.

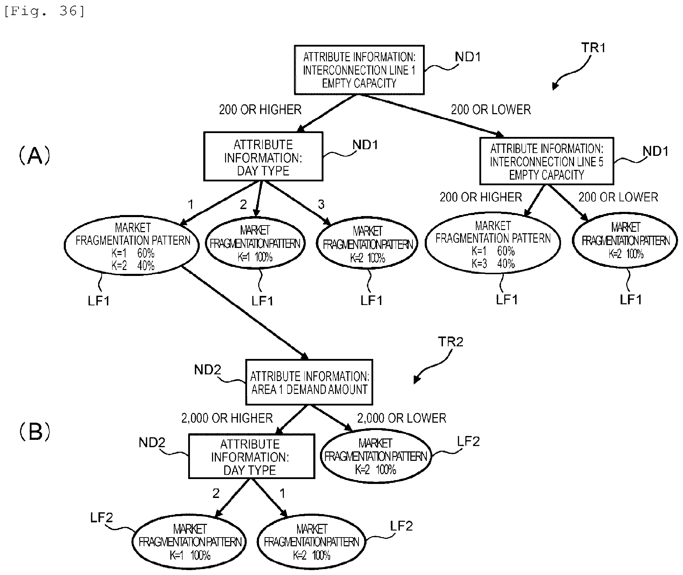

Herein, Fig. 36 is a schematic configuration of the diagnosis determination tree TR generated in the aforementioned profiling processing. Processing of generating the diagnosis determination tree TR is processing for integrally generating the diagnosis determination tree TR for estimating each market fragmentation pattern related to each time frame based on attribute information of each time frame registered in the attribute information table 608. Such a diagnosis determination tree TR is configured of one or a plurality of diagnosis determination trees TR (the first diagnosis determination tree TR1 and the second diagnosis determination tree TR2 in an example shown in Fig. 36).

The first diagnosis determination tree TR1 is a diagnosis tree prepared based on only attribute information corresponding to an analysis period, which is each time frame. In practice, in the first diagnosis determination tree TR1, content of each node ND1 is related to only attribute information of a time frame, which is recognized based on time-series position data, and each time frame can be associated with any market fragmentation pattern based on only attribute information of the time frame.

In addition, out of respective leaves LF1 of the first diagnosis determination tree TR1, a leaf LF1 representing a market fragmentation pattern, which is an allocation destination and is not clear (a market fragmentation pattern, which is an allocation destination, is not determined to be one), is set as a root, and time-series position data of an existing user allocated to the leaf LF1 for an analysis period, is analyzed, thereby obtaining supplementary information. The second diagnosis determination tree TR2 is a diagnosis tree prepared based on the supplementary information of the time frames (attribute information of a market fragmentation pattern to which the time frames belong). In practice, in the second diagnosis determination tree TR2, content of each node ND2 is related to only supplementary information of a time frame, and a time frame can be associated with any market fragmentation pattern based on the supplementary information.

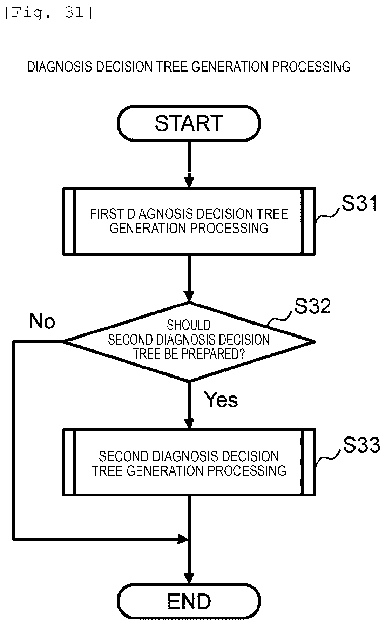

Fig. 31 shows an example of processing procedures of diagnosis determination tree generation processing of generating the diagnosis determination tree TR.

When processing proceeds to Step S22 of Fig. 30, diagnosis determination tree generation processing is started. First, the fragmentation occurrence predicting unit 71c generates the first diagnosis determination tree TR1 with reference to the market fragmentation actual result table 611 and the attribute information table 608 (Step S31).

Next, the fragmentation occurrence predicting unit 71c determines whether or not the leaf LF1 representing a market fragmentation pattern, which is an allocation destination, is not determined to be one exists in the first diagnosis determination tree TR1 (whether or not to generate a second diagnosis determination tree) (Step S32). When negative results are obtained through this determination, then the fragmentation occurrence predicting unit 71c terminates diagnosis determination tree generation processing.

On the other hand, when a positive result is obtained in the determination of Step S32, the fragmentation occurrence predicting unit 71c generates the second diagnosis determination tree TR2 with reference to the attribute information table 608 (Step S33), and terminates the diagnosis determination tree generation processing.

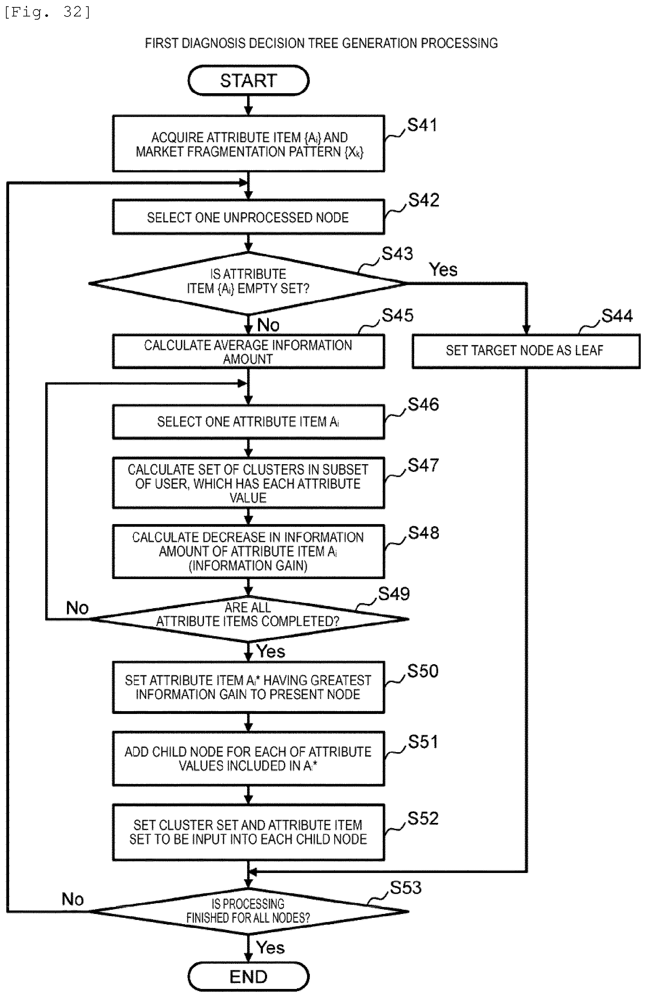

Fig. 32 shows an example of processing procedures of first diagnosis determination tree generation processing executed by the fragmentation occurrence predicting unit 71c in Step S31 of such diagnosis determination tree generation processing.

When processing proceeds to Step S31 of the diagnosis determination tree generation processing, the fragmentation occurrence predicting unit 71c starts the first diagnosis determination tree generation processing of Fig. 32, and first, acquires market fragmentation pattern information (cluster set) $\{X_k\}$ obtained through identification of the market fragmentation pattern described above and the attribute item $\{A_i\}$ of each time frame (Step S41).

Next, the fragmentation occurrence predicting unit 71c selects one unprocessed node (Step S42). Since processing after Step S42 starts from a root (top node) of the diagnosis determination tree TR intended to be generated at that time, the fragmentation occurrence predicting unit 71c selects a root in Step S42 which is executed for the first time.

Next, the fragmentation occurrence predicting unit 71c determines whether or not the attribute item $\{A_i\}$ of a user, which was acquired in Step S41, is an empty set (Step S43). When a positive result is obtained in this determination, then, the fragmentation occurrence predicting unit 71c takes processing to Step S53 after setting the node selected in Step S41 as a leaf (a terminal node) (Step S44).

On the other hand, when a negative result is obtained in the determination of Step S43, the fragmentation occurrence predicting unit 71c calculates the average information amount H of all market fragmentation patterns of a user, which are included in the present market fragmentation pattern information, through the following equation (2A) (Step S45). In the equation (2A), $|X_k|$ is a parameter that indicates the number of users included in the market fragmentation pattern k.

$$H(\{X_k\}) = -\sum_k (|X_k| / \sum_n |X_n|) \log(|X_k| / \sum_n |X_n|)$$

The average information amount $H(|X_k|)$ takes a high value if variation in a market fragmentation pattern, to which input time-series position data of a user belongs, is great, and takes a low value in a case where a deviation is great. In a case where input time-series position data of each user belongs to only one market fragmentation pattern, the average information amount becomes "0".

Next, the fragmentation occurrence predicting unit 71c selects one unprocessed attribute item $A_i$ from the input attribute item $\{A_i\}$ (Step S46), and calculates a market fragmentation pattern set $\{Y_{k,j}\}$ in a subset of a user, which has values $(a_i, 1, a_i, 2, a_i, 3, ...)$ included in the selected the attribute item $A_i$, as attribute values and the number of users thereof $|Y_{k,j}|$ (Step S47).

As for the attribute item $A_i$ selected in Step S46, the fragmentation occurrence predicting unit 71c calculates the information gain IG $(A_i)$ through the following equation (2B) (Step S48). The information gain IG $(A_i)$ is a parameter indicating how much variation in a belonging market fragmentation pattern decreases in a case where users are partially divided by an attribute value $(a_i, 1, a_i, 2, a_i, 3, ...)$.

$$IG(A_i) = H(\{X_k\}) - \sum_j \sum_k (|Y_{k,j}| / \sum_n |Y_{n,j}|) \log((|Y_{k,j}| / \sum_n |Y_{n,j}|)$$

Next, the fragmentation occurrence predicting unit 71c determines whether or not the calculation of the information gain IG $(A_i)$ is finished for all input attribute items $\{A_i\}$ (Step S49). Then, the fragmentation occurrence predicting unit 71c returns to Step S46 when a negative result is obtained in this determination, and repeats processing of S46 to Step S49 while sequentially switching the attribute item $A_i$ selected in Step S46 to another unprocessed node.

When a positive result is obtained in Step S49 by finishing the calculation of the information gain IG $(A_i)$ for all the attribute items $\{A_i\}$, then, the fragmentation occurrence predicting unit 71c sets the attribute item $A_i*$ having the greatest information gain IG $(A_i)$ to the present node of the diagnosis determination tree TR (Step S50), and prepares a child node for each of attribute values $(a_i*, 1, a_i*, 2, a_i*, 3, ...)$ of the attribute item $A_i*$ (Step S51).

Next, the fragmentation occurrence predicting unit 71c sets a cluster set and an attribute item set to be input into each child node (Step S52). More specifically, as for attribute values $(a_i*, 1, a_i*, 2, a_i*, 3, ...)$ of the attribute item $A_i*$, the fragmentation occurrence predicting unit 71c associates a market fragmentation pattern subset $\{Y_{k,j}\}$ for a time frame having the attribute value $(a_i*, j)$ as a new market fragmentation pattern information $\{X_k\}$ with respect to a corresponding child node. In addition, the fragmentation occurrence predicting unit 71c associates the subset $\{A_i/A_i*\}$ of an attribute item excluding the aforementioned attribute item $A_i*$ having the greatest information gain IG $(A_i)$ as a new attribute item $\{A_i\}$ with respect to each child node.

Next, the fragmentation occurrence predicting unit 71c determines whether or not the execution of processing of Step S42 to Step S52 is finished for all nodes (Step S53). Then, the fragmentation occurrence predicting unit 71c returns to Step S42 when a negative result is obtained in this determination, and repeats processing of Step S42 to Step S53 while sequentially switching the node selected in Step S42 to another unprocessed node.

When a positive result is obtained in Step S53 by finishing the determination of the attribute information $A_i^*$ for all nodes, then, the fragmentation occurrence predicting unit 71c terminates the first diagnosis determination tree generation processing.

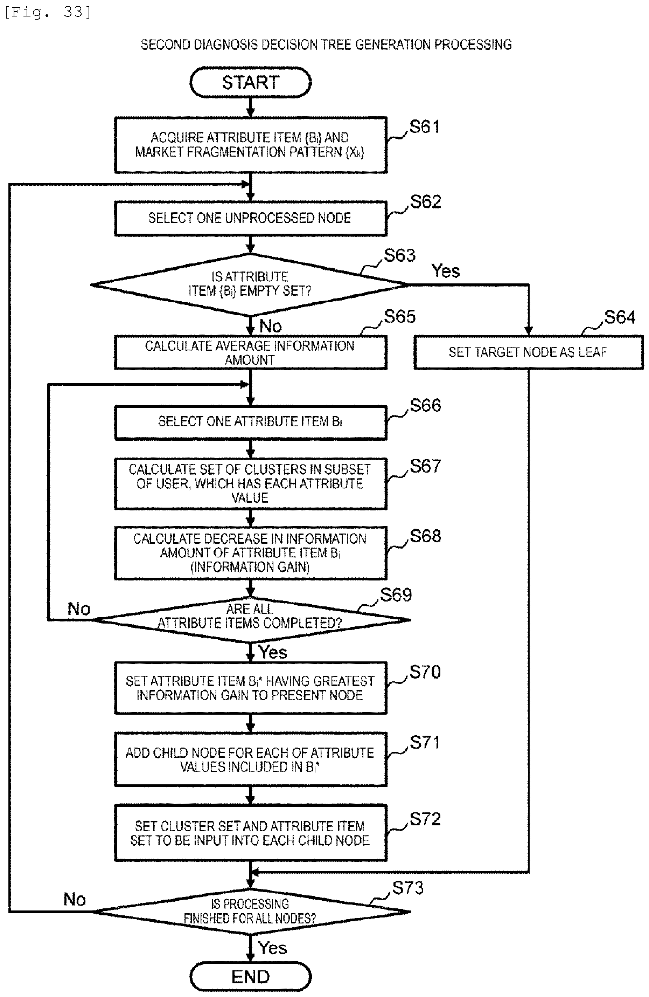

Fig. 33 shows an example of processing procedures of second diagnosis determination tree generation processing executed by the fragmentation occurrence predicting unit 71c in Step S33 of such diagnosis determination tree generation processing (Fig. 31).

The second diagnosis determination tree generation processing shown in Fig. 33 is executed by the fragmentation occurrence predicting unit 71c when preparing the second diagnosis determination tree TR2 with supplementary information of a time frame as the attribute item $\{B_i\}$ as for the leaf LF1 representing a market fragmentation pattern, which is an allocation destination and is not clear (a market fragmentation pattern, which is an allocation destination, is not determined to be one), out of the respective leaves LF1 of the first diagnosis determination tree TR1 generated in the first diagnosis determination tree generation processing described above with reference to Fig. 32.

Since processing content of Step S61 to Step S73 of the second diagnosis determination tree generation processing is the same as Step S41 to Step S53 of the first diagnosis determination tree generation processing described above with reference to Fig. 32 except for the fact that supplementary information is set as an input item, description thereof will be omitted.

Although a case where ID3 is used in the first diagnosis determination tree generation processing described above and the second diagnosis determination tree generation processing described above is described, any method may be used insofar as it is a method of generating a determination tree that allows diagnosing a market fragmentation pattern, and a method of generating different diagnosis determination trees may be used as a method of generating the first and second diagnosis determination trees TR1 and TR2.

(A-2) Market Fragmentation Pattern Prediction Processing in Which Attribute Prediction Value Is Used

Processing content (further details shown in Step S17 of Fig. 29) of processing of predicting a market fragmentation pattern of each future time frame based on attribute information of a time frame, which is a prediction target, will be described.

First, the fragmentation occurrence predicting unit 71c determines a market fragmentation pattern for each time frame based on attribute information identified for each time frame with reference to a diagnosis determination tree prepared through profiling processing, the demand prediction information table 601, the supply capacity prediction information table 604, the market fragmentation actual result table 611, the interconnection line empty capacity information table 605, and the attribute information table 608.

More specifically, a dominant attribute of a time frame which belongs to a certain market fragmentation pattern in a diagnosis determination tree is compared with an attribute predicted in a time frame, which is a prediction target, and a market fragmentation pattern, in which the number of matching attributes is equal to or higher than a threshold value (matching attribute item number threshold value) set in advance is determined as a market fragmentation pattern of that time frame. A prediction result of market fragmentation is saved, for example, in a format shown in the market fragmentation prediction value table 606.

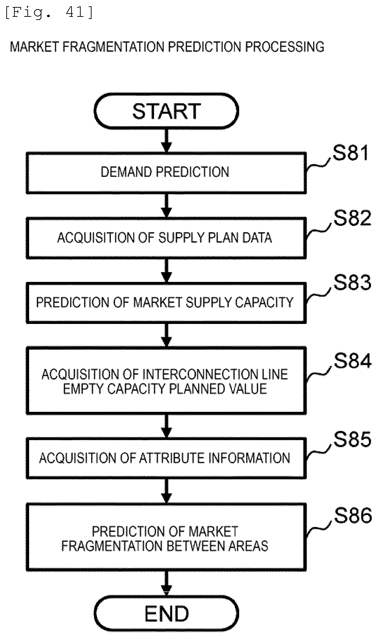

As another method of market fragmentation prediction processing, market fragmentation between respective areas may be predicted instead of predicting a market fragmentation pattern, as will be described later with reference to Fig. 41.

(A-3) Warning of Market Fragmentation Occurrence

The market fragmentation warning unit 71d notifies (for example, warns) a user of probability of the prediction of occurrence of market fragmentation turning out to be right or wrong based on a prediction result of occurrence of market fragmentation between areas, which is made by the fragmentation occurrence predicting unit 71c (Step S18).

More specifically, first, the market fragmentation warning unit 71d classifies past time frames into the respective leaves LF1 based on attribute information thereof and a diagnosis determination tree. By classifying time frames, the number of time frames belonging to each leaf LF1 is calculated. Next, the leaf LF1, to which a time frame, which is a prediction target, belongs is determined based on an attribute item in the time frame, which is the prediction target. Then, occurrence probability of each market fragmentation pattern is calculated based on the proportion of market fragmentation patterns that belong to the leaf LF1.

For example, in an example shown in Fig. 36, in a case where attributes of a time frame, which is a prediction target, are "interconnection line 1 empty capacity: 150" and "interconnection line 5 empty capacity 250", the proportions of members belonging to the leaves are market fragmentation pattern 1 = 60% and market fragmentation pattern 3 = 40%, respectively. These are considered as occurrence probability.

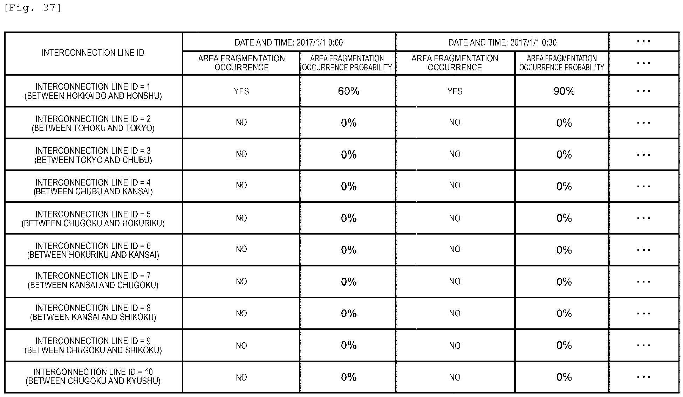

A user is notified of occurrence probability of market fragmentation calculated as described above through a screen (interface) shown in Fig. 37, a printed material, or the like.

When such series of processing ends, then, the trading area fragmentation predicting unit 71 calls the market price predicting unit 72.

(B) Market Price Prediction Processing

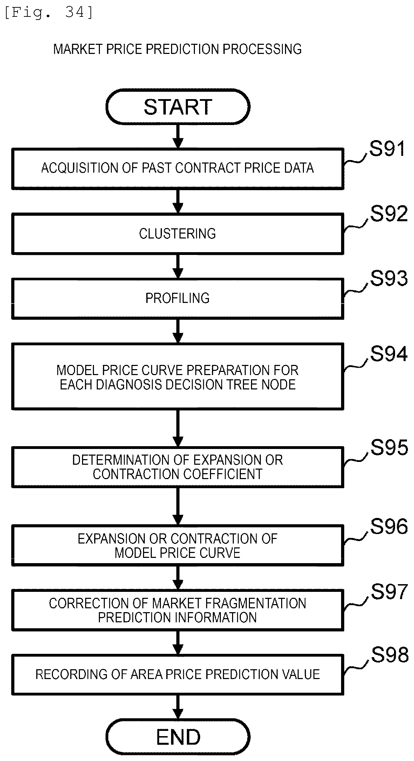

Fig. 34 shows an example of processing procedures of market price prediction processing executed by the market price predicting unit 72 in Step S2 of Fig. 28. When the market price predicting unit 72 is called by the trading area fragmentation predicting unit 71, market price prediction processing is started.

First, the clustering execution unit 72a reads time-series contract price data for a past fixed period from the contract price actual result information table 607 (Step S91).

Next, the clustering execution unit 72a executes clustering execution processing of classifying time-series contract price data for each day, of which frequency is converted into a plurality of clusters, based on a feature amount of contract price data with the use of a clustering technique including k-means method, a vector quantization method, and a support vector machine (Step S92).

At this time, the clustering execution unit 72a performs classification by sequentially setting a cluster number to 2, 3, 4, ..., and determines an optimal cluster number by evaluating similarity in a cluster and separability between clusters at all such times.

Similarity in a cluster is evaluated by evaluating, for example, a result of clustering of each of clusters 1 to M according to a feature amount of time-series position data for each day of a target user at that time and a distance between cluster centroids of respective clusters. As a method of using a feature amount of time-series position data for each day of a target user and a distance between cluster centroids of respective clusters, for example, evaluation is made with the use of each feature amount of time-series position data for each day in a cluster, a distance between cluster centroids of respective clusters, variance of time-series position data for each day in a cluster, and a cluster number.

As such a method, for example, there is a method of making evaluation with the use of Akaike's information criterion (AIC). Akaike's information criterion is expressed as the following equation (2C) with maximum likelihood as L and the number of freedom degree parameters as K in general.

$$AIC = -2 \ln L + 2K$$

For example, the maximum likelihood L is expressed as the following equation (2D). In the equation (2D), $RSS_k$ indicates a squared sum of distances from cluster centroids of all members (herein, time-series position data for each of a target user) of a cluster k, and $\sigma$ indicates variance of members.

$$L = -\sum_{k=1}^{M} \frac{RSS_k}{2\sigma}$$

In addition, the number K of freedom degree parameters is expressed, for example, as the following equation (2E). In the equation (2E), M indicates a cluster number, and D indicates the number of dimensions of a feature amount.

$$K = M \times D$$

However, an evaluation criterion (for example, Bayesian Information Criterion (BIC)) other than Akaike's information criterion can also be used.

Separability between clusters is evaluated, for example, with the use of a distance between respective clusters. For example, each interface that can separate clusters from each other is calculated by a multiclass support vector machine, and after then, a distance between clusters is calculated as an average degree of separation between clusters B(N) through the following equation (2F) with a total value of margins (distances) between respective clusters as $M_N$. In the equation (2F), N indicates a cluster number.

$$B(N) = M_N /_N C_2$$

The average degree of separation between clusters B(N) is an indicator showing a degree of separation between clusters as described above, and as this value becomes higher, clusters are separated from each other more. In addition, an average degree of separation between clusters may be any degree insofar as it is an indicator that increases if an average distance between respective clusters is large, or an average value of respective distances between sets {Ck} of cluster centroids may be applied.

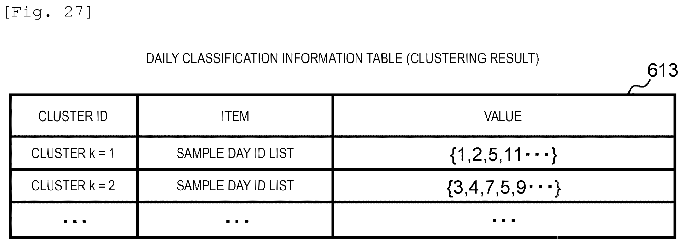

When the execution of clustering execution processing of time-series contract price data for each day is finished in such a manner, the clustering execution unit 72a stores each cluster sample day ID list obtained at this time into the daily classification information table 613 of Fig. 27. Then, the clustering execution unit 72a calls the profiling processing unit 72b.

Profiling processing performed by the profiling processing unit 72b is about determining a dominant attribute for each contract price pattern (cluster ID) classified by the clustering execution unit 72a, for example, through diagnosis tree learning, and preparing a diagnosis determination tree. Description of specific processing thereof will be omitted since it is the same as profiling processing of (A-1) (Step S93). At this time, for example, information of a month, a day of the week, weekday and holiday distinction, a temperature, a daily average demand amount of a target day, a contract price pattern of a previous day, and the like may be used as attribute information for profiling to be used.

Next, the prediction curve preparing unit 72c prepares a price curve for each node of a diagnosis determination tree prepared in the profiling processing, which becomes a model (model price curve) (Step S94).

More specifically, in preparing a model price curve, the prediction curve preparing unit 72c prepares one or a plurality of candidates of a model price curve for each end node of a diagnosis determination tree through an original waveform or composition of original waveforms of a member which belongs to the node.

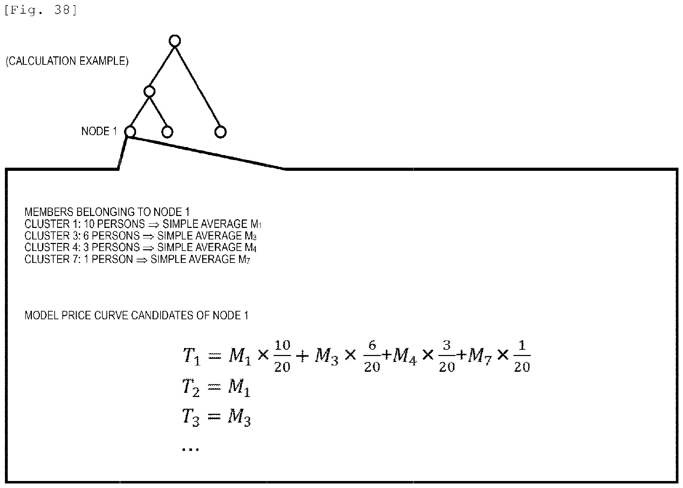

An example of preparing a model price curve candidate with respect to a certain node is shown in Fig. 38. In this example, the prediction curve preparing unit 72c calculates a simple average of members (time-series contract price data) that belongs to a node, which is a first target, for each cluster to which the members belong, and acquires a simple average for each cluster. Then, the prediction curve preparing unit 72c prepares a model price curve candidate $T_1$ of the node by multiplying a ratio between a total number of members that belong to the node and the number of members of each cluster by a simple average for each cluster. In addition, original waveforms of a particular cluster of members that belong to the node are set as model price curve candidates $T_2$, $T_3$, ....

In addition, based on a diagnosis determination tree prepared in the profiling processing and attribute information (a month, a day of the week, weekday and holiday distinction, a temperature prediction value, and the like) of a prediction target day, the prediction curve preparing unit 72c performs identification of an end node of the diagnosis determination tree to which the prediction target day belongs. Then, the prediction curve preparing unit 72c determines a model price curve candidate corresponding to the end node as a model price curve of the prediction target day.

Next, the prediction curve preparing unit 72c determines an expansion or contraction coefficient for expansion and contraction-correcting the model price curve of the identified end node (Step S95). For example, prediction values of a daily minimum price and a daily average price are used as the expansion or contraction coefficient. A daily minimum price and a daily average price are predicted, for example, with the use of an autoregressive model of a past value or the like. In addition, as another means for determining an expansion or contraction coefficient, an expansion or contraction coefficient may be calculated by multiplying a demand prediction value and a supply planned value of a prediction target day by a predetermined coefficient.

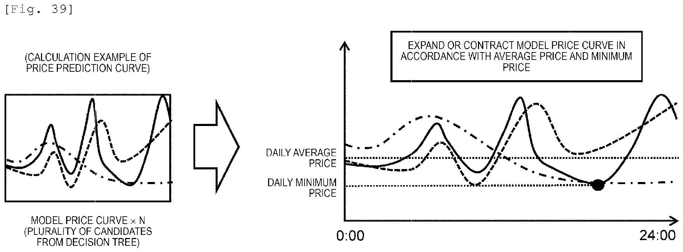

Next, the prediction curve preparing unit 72c expands or contracts a model price curve with the expansion or contraction coefficient determined as described above (Step S96). Expansion or contraction of a model price curve is performed as follows. For example, as shown in Fig. 39, a daily minimum price prediction value is the lowest value of the day, and a price prediction curve of one or a plurality of candidates is prepared by multiplying a constant that makes a daily average price prediction value the same as an average value of the curve after expansion or contraction by a value of each hour in a model price curve candidate.

Next, the prediction curve correcting unit 72d executes correction processing of a price prediction curve with the use of a prediction result of occurrence of market fragmentation, which is made by the trading area fragmentation predicting unit 71 (Step S97).

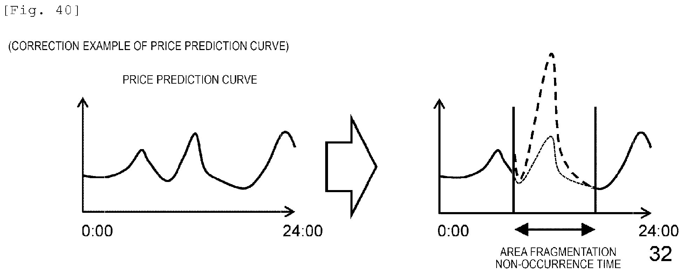

More specifically, the prediction curve correcting unit 72d expands or contracts a price prediction curve by multiplying the price prediction curve by a predetermined coefficient with respect to non-occurrence time range (or an occurrence time range) of market fragmentation between predetermined areas (Fig. 40). Accordingly, for example, a phenomenon that an area price of an area A soars and market participants change due to occurrence of market fragmentation can be modeled.

At this time, the execution of expansion or contraction of the curve with the use of occurrence of market fragmentation does not necessarily have to be performed, and a user may determine whether or not to execute expansion or contraction according to an area for which area price prediction is to be performed. In addition, in order to determine whether or not to execute expansion or contraction, an average value of area prices of each area for a past predetermined period may be calculated. As for an area price average value of an area for which area price prediction is to be performed, whether or not to execute expansion or contraction may be determined based on occurrence of market fragmentation with respect to an area with a high area price average value.

In addition, a predetermined coefficient used for expansion or contraction of a price prediction curve may be determined based on a difference, a ratio, or the like between average values of area prices of areas.

A prediction result of an area price is saved, for example, in a format shown in the area price prediction value table 609 (Step S98).

In addition, the market price predicting unit 72 may make notification of one or a plurality of price prediction curves, or may make notification of an area price prediction value. According to the notification, a user can easily select a price prediction curve or an area price prediction value that is suitable for oneself.

When such series of processing ends, then, the market price predicting unit 72 calls the bidding planning unit 73.

(C) Bidding Planning Processing

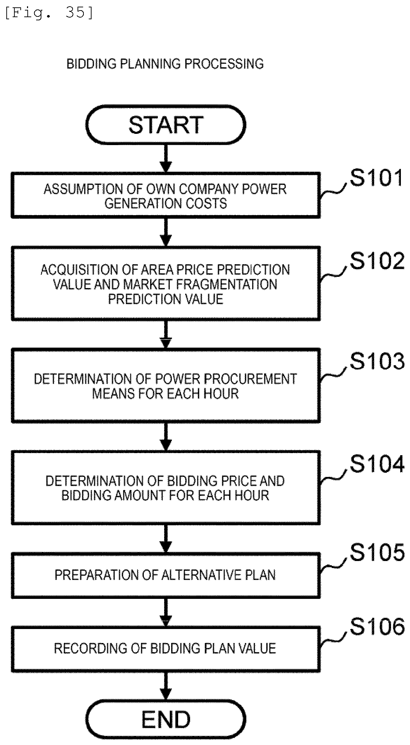

Fig. 35 shows an example of processing procedures of bidding planning processing executed by the bidding planning unit 73 in Step S3 of Fig. 28. When the bidding planning unit 73 is called by the market price predicting unit 72, bidding planning processing starts.

First, the own company power generation cost assuming unit 73a assumes a power procurement unit price in a case where own company has power generation facilities and own company has generated power (Step S101) . In assuming own company power generation costs, for example, power generation costs per unit power generation amount can be calculated by a user setting costs for a certain output of each generator in advance or defining an equation with a fuel unit price as a coefficient.

Next, the procurement means determining unit 73b acquires a market fragmentation prediction value of the market fragmentation prediction value table 606 and an area price prediction value of the area price prediction value table 609, which are predicted by the trading area fragmentation predicting unit 71 and the market price predicting unit 72 (Step S102).

Next, the procurement means determining unit 73b determines power procurement means for each time frame based on a market fragmentation prediction value, an area price prediction value, and power generation costs per unit power generation amount (Step S103).

More specifically, the procurement means determining unit 73b determines procurement means (for example, spot market procurement, hour-ahead market procurement, and procurement through own company generation) in consideration of costs and risks of each procurement means based on a predetermined prediction result of occurrence of market fragmentation between areas in each time frame (every 30 minutes, in the example) in which a first bidding plan is performed, an area price prediction value, and own company power generation costs.

As a method that takes costs and risks for each procurement means into account, first, for example, costs in a case where procurement is made in the hour-ahead market are assumed as a value obtained by multiplying an area price prediction value by a predetermined coefficient of "0" or higher and "1" or lower (for example, "0.5"). Then, the procurement means determining unit 73b determines a procurement risk coefficient of procurement including spot market procurement, hour-ahead market procurement, and own company generation in consideration of a possibility that the procurement can be performed at an assumed price. For example, it is considered that procurement through own company generation has a low procurement risk, and procurement in the hour-ahead market has a high procurement risk. Accordingly, for example, procurement risk coefficients in spot market procurement, hour-ahead market procurement, and own company power generation procurement are set to $R\_spot = 2$, $R\_hour = 6$, $R\_self = 1$, respectively.

In addition, since price fluctuations are assumed even during non-occurrence time of market fragmentation related to an area price soar, the procurement means determining unit 73b considers that a procurement risk is high, and sets a fragmentation risk coefficient $R\_disrupt = 2$ during non-occurrence time of market fragmentation and a fragmentation risk coefficient $R\_disrupt = 1$ during occurrence time.

As described above, for example, it is assumed that an area price prediction value of a target area in a certain time frame is 10 yen, own company power generation costs are 50 yen, and hour-ahead market procurement costs are 5 yen (= 10 yen x 0.5) if non-occurrence of market fragmentation related to an area price soar has taken place. Expected costs in spot market procurement are estimated to be 10 yen x R_disrupt(= 2) x R_spot (= 2) = 40 yen, expected costs in hour-ahead market procurement are estimated to be 5 yen x R_disrupt (= 2) x R_hour(= 6) = 60 yen, and expected costs in own company power generation procurement are estimated to be 50 yen x R_self (= 1) = 50 yen. For example, the procurement means determining unit 73b selects spot market procurement incurring the lowest expected costs.

Next, the bidding price and bidding amount determining unit 73c determines a bidding price and a bidding amount for each hour in the market based on power procurement means of each time range, which is determined by the procurement means determining unit 73b, and a future contract price predicted by the market price predicting unit 72 (Step S104).

More specifically, for example, in a case where spot market procurement is selected as described above, the bidding price and bidding amount determining unit 73c sets a bidding amount as electric energy required for own company in a target time frame, and sets a spot market bid, in which a value obtained by multiplying an area price, which is a predicted bidding price, by a predetermined safety coefficient (= 1.1 or the like) for avoiding trading non-establishment is set as a bidding price, as a planned value.

In addition, although a case where a plan of participating in a bid as a purchaser to procure power is devised in the description above, a plan of selling power generated own company in the market may be devised. In this case, for example, own company power generation costs described above and an area price prediction value are compared, and own company participates in a bid to sell power in a time range in which own company power generation costs are lower than the area price prediction value.

The alternative plan determining unit 73d devises a bidding plan in which a case where prediction of occurrence of market fragmentation calculated by the trading area fragmentation predicting unit 71 turns out to be wrong is assumed (Step S105).

More specifically, in a case where occurrence probability of market fragmentation of the market fragmentation prediction value table 606 is a threshold value or lower, first, the alternative plan determining unit 73d assumes a case where market fragmentation does not occur, and devises a bidding plan based on an assumed market fragmentation pattern. For example, occurrence probability of area fragmentation between Hokkaido and Honshu is 60% at 0:00 on January 1, 2017 of the market fragmentation prediction value table 606 as shown in Fig. 20. Therefore, in a case where the threshold value is set to 70%, it is considered that a case where area fragmentation does not occur can also take place, and a bidding plan in a case where this case is assumed is prepared.

Since preparation of a bidding plan is the same as the processing of the bidding price and bidding amount determining unit 73c described above, description thereof will be omitted.

Next, the bidding price and bidding amount determining unit 73c stores the determined bidding plan into the bid determination value table 610 (Step S106).

(2-4) Effects of the Embodiment

As described above, the power trading assistance device 60 of the embodiment collects an interconnection line empty capacity planned value, predicted area demand, a supply plan, and other environment information when formulating a bidding plan for the power trading market, predicts whether market fragmentation for each area interconnection line occurs based on the collected environment information, predicts an area price based on the predicted occurrence of market fragmentation and a past price actual result, determines power procurement means for each hour based on the predicted occurrence of market fragmentation and the predicted area price, and prepares an alternative plan which indicates warning to a user based on occurrence probability of market fragmentation and is prepared for a case where prediction of occurrence of market fragmentation turns out to be wrong.

Therefore, even in a case where a price range of an area price fluctuates according to how areas are divided by market fragmentation, the power trading assistance device 60 can predict whether market fragmentation between respective areas occurs from environment information which can be acquired, and can take into account an effect of occurrence of market fragmentation on a contract price through price prediction, in which an effect of predicted occurrence of market fragmentation is taken into account. Accordingly, price prediction accuracy can be improved, and power trading support of devising a highly economic bidding plan can be realized.

(3) Third Embodiment

In the embodiment, as another method of market fragmentation prediction processing, for example, a fixed threshold value is provided with respect to interconnection line empty capacity between areas read from the interconnection line empty capacity information table 605. If the interconnection line empty capacity is equal to or higher than the threshold value, it is considered that market fragmentation has not occurred, and if the interconnection line empty capacity is equal to or lower than the threshold value, it is considered that market fragmentation has occurred. In this manner, market fragmentation between respective areas is predicted as shown in processing of Fig. 41, instead of predicting a market fragmentation pattern (Step S86).

In addition, in a case of the method described above, a threshold value for interconnection line empty capacity between areas is provided step by step, and it is considered that occurrence probability of area fragmentation changes each time interconnection line empty capacity exceeds each threshold value. Accordingly, the market fragmentation occurrence probability between areas is acquired.

Since processing of Step S81 to Step S85 is the same as processing of Step S11, Step S12, Step S13, Step S15, and Step S16 shown in Fig. 29, description thereof will be omitted.

(4) Other Embodiments

Although a case where the present invention is applied to a power trading assistance device has been described in the aforementioned first to third embodiments, without being limited thereto, the present invention can be widely applied to other types of calculators.

In addition, although a case where an input and output device is set as a notifying device has been described in the aforementioned first to third embodiments, the present invention is not limited thereto. The notifying device may be provided outside the power trading assistance device.

In addition, although a case where notification of a prediction result of market fragmentation, an area price prediction value, probability of prediction of occurrence of market fragmentation turning out to be right or wrong, and a price prediction curve is made has been described in the aforementioned first to third embodiments, the present invention is not limited thereto. Notification of other information predicted (generated) by each unit and information generated by each unit during prediction (a market fragmentation pattern in a prediction target period, information related to a diagnosis determination tree, a model price curve, a price prediction curve before correction, and the like) may be made.

The present invention is not limited to the embodiments described above, configuration elements can be modified and materialized in an execution. In addition, for example, it is also possible to use configuration elements of the first to third embodiments with the configuration elements being combined as appropriate.

Reference Signs List

    1: power trading assistance device
    11: player behavior predicting unit
    12: market physical restriction predicting unit
    13: market predicting unit

**Claims**

**1.**   A power trading assistance device comprising:

    a player behavior predicting unit that predicts behavior of a player and calculates an order receiving and placing information prediction value;
    a market physical restriction predicting unit that predicts a power transportation path state, including interconnection line empty capacity which indicates power transmission capacity between areas, and calculates a power transportation path state prediction value; and
    a market predicting unit that predicts a market price based on the order receiving and placing information prediction value and the power transportation path state prediction value,
    wherein the market predicting unit includes:

        a trading area fragmentation predicting unit that predicts whether market fragmentation between areas occurs based on a power demand amount for each area in a prediction target period, which is calculated by the player behavior predicting unit as the order receiving and placing information prediction value, a power supply amount for each area in the prediction target period, and the power transportation path state prediction value, wherein market fragmentation occurs when a planned value of a power interchange amount between areas exceeds interconnection line empty capacity between the areas, and
        a market price predicting unit that calculates a market price prediction value indicating a market price in each area in the prediction target period based on a prediction result from the trading area fragmentation predicting unit,

    wherein the trading area fragmentation predicting unit identifies a pattern of market fragmentation for each predetermined time, which has occurred in the past, based on a market fragmentation pattern actual value indicating a past market fragmentation pattern actual result between areas, and identifies the pattern of market fragmentation of the prediction target period based on attribute information, which is a factor of generating the pattern of market fragmentation in each time range, and attribute information on the prediction target period, and wherein the attribute information comprises a temperature.

**2.** The power trading assistance device according to Claim 1,
wherein the trading area fragmentation predicting unit determines a dominant attribute, which is a factor of generating the pattern of market fragmentation in each time range through determination tree learning, calculates occurrence probability of the pattern of market fragmentation based on a member existing in a terminal node generated through the determination tree learning, and instructs a notifying device to notify a user of the calculated occurrence probability.

**3.** The power trading assistance device according to Claim 1,
wherein the trading area fragmentation predicting unit determines that market fragmentation between areas does not occur in a case where the interconnection line empty capacity is a threshold value or higher, and determines that market fragmentation between areas occurs in a case where the interconnection line empty capacity is lower than the threshold value.

**4.** The power trading assistance device according to Claim 1,
wherein the trading area fragmentation predicting unit instructs a notifying device to notify a user of whether there is predicted occurrence of market fragmentation between areas.

**5.** The power trading assistance device according to Claim 1,
wherein the market price predicting unit performs, based on time-series contract price data for each area in a predetermined period and attribute information on the prediction target period, clustering of the time-series contract price data, and prepares a price prediction curve based on past time-series contract price data and a member belonging to each cluster.

**6.** The power trading assistance device according to Claim 5,
wherein the market price predicting unit multiplies an occurrence time range, in which occurrence of market fragmentation is predicted by the trading area fragmentation predicting unit, or a non-occurrence time range, in which occurrence of market fragmentation is not predicted by the trading area fragmentation predicting unit, of an area in the price prediction curve by a predetermined coefficient.

**7.** The power trading assistance device according to Claim 1, further comprising:
a bidding planning unit that calculates a bidding price based on a prediction result from the trading area fragmentation predicting unit, a market price prediction value calculated by the market price predicting unit, and an own company power generation cost.

**8.** The power trading assistance device according to Claim 7,
wherein the bidding planning unit calculates an expected cost for each procurement means with the use of a procurement risk coefficient related to the procurement means and a fragmentation risk coefficient related to market fragmentation, and determines procurement means having the lowest expected cost as procurement means to be used in bidding price calculation.

**9.** The power trading assistance device according to Claim 8,
wherein the bidding planning unit calculates a bidding price based on the expected cost of the determined procurement means, a bidding amount required for own company, and a safety coefficient for avoiding non-establishment of trading.

**10.** The power trading assistance device according to Claim 7,
wherein the bidding planning unit calculates a bidding price in a case where prediction made by the trading area fragmentation predicting unit turns out to be wrong.

**11.** The power trading assistance device according to Claim 1,
wherein the player behavior predicting unit includes a power generation behavior predicting unit that calculates a power supply amount of the prediction target period by predicting a generator to be operated in the future based on attribute information which can be a factor of power generation.

**12.** The power trading assistance device according to Claim 1,
wherein the market physical restriction predicting unit includes an interconnection line empty capacity predicting unit that predicts the interconnection line empty capacity based on an interconnection line planned value and a power interchange between areas prediction value.

13. A market price prediction information generation method comprising:

a first step of allowing a player behavior predicting unit to predict behavior of a player and to calculate an order receiving and placing information prediction value;

a second step of allowing a market physical restriction predicting unit to predict a power transportation path state, including interconnection line empty capacity which indicates power transmission capacity between areas, and to calculate a power transportation path state prediction value; and

a third step of allowing a market predicting unit to predict a market price based on the order receiving and placing information prediction value and the power transportation path state prediction value;

wherein the third step of allowing the market predicting unit to predict the market price includes:

allowing a trading area fragmentation predicting unit to predict whether market fragmentation between areas occurs based on a power demand amount for each area in a prediction target period, which is calculated by the player behavior predicting unit as the order receiving and placing information prediction value, a power supply amount for each area in the prediction target period, and the power transportation path state prediction value, wherein market fragmentation occurs when a planned value of a power interchange amount between areas exceeds interconnection line empty capacity between the areas, and

allowing a market price predicting unit to calculate a market price prediction value indicating a market price in each area in the prediction target period based on a prediction result from the trading area fragmentation predicting unit,

wherein the trading area fragmentation predicting unit identifies a pattern of market fragmentation for each predetermined time, which has occurred in the past, based on a market fragmentation pattern actual value indicating a past market fragmentation pattern actual result between areas, and identifies the pattern of market fragmentation of the prediction target period based on attribute information, which is a factor of generating the pattern of market fragmentation in each time range, and attribute information on the prediction target period, and wherein the attribute information comprises a temperature.

## Patentansprüche

1. Stromhandelsunterstützungsvorrichtung, die Folgendes umfasst:

eine Akteursverhalten-Vorhersageeinheit, die das Verhalten eines Akteurs vorhersagt und einen Auftragsempfangs- und -platzierungsinformationsvorhersagewert berechnet;

eine Physische-Markteinschränkungs-Vorhersageeinheit, die einen Stromtransportpfad-Zustand vorhersagt, einschließlich einer Verbindungsleitungs-Freikapazität, welche die Stromübertragungskapazität zwischen Bereichen angibt, und einen Stromtransportpfad-Zustands-Vorhersagewert berechnet; und

eine Marktvorhersageeinheit, die einen Marktpreis beruhend auf dem Auftragsempfangs- und -platzierungsinformationsvorhersagewert und dem Stromtransportpfad-Zustands-Vorhersagewert vorhersagt,

wobei die Marktvorhersageeinheit Folgendes umfasst:

eine Handelsbereichsfragmentierungs-Vorhersageeinheit, die beruhend auf einem Strombedarfsausmaß für jeden Bereich in einem Vorhersagezielzeitraum, der durch die Akteursverhalten-Vorhersageeinheit als der Auftragsempfangs- und - platzierungsinformationsvorhersagewert berechnet wird, einem Stromversorgungsausmaß für jeden Bereich im Vorhersagezielzeitraum und dem Stromtransportpfad-Zustand vorhersagt, ob eine Marktfragmentierung zwischen Bereichen eintritt, wobei eine Marktfragmentierung eintritt, wenn ein geplanter Wert eines Stromaustauschausmaßes zwischen Bereichen die Verbindungsleitungs-Freikapazität zwischen den Bereichen übersteigt, und

eine Marktpreisvorhersageeinheit, die einen Marktpreisvorhersagewert berechnet, welcher einen Marktpreis in jedem Bereich im Vorhersagezielzeitraum angibt, der auf einem Vorhersageergebnis von der Handelsbereichsfragmentierungs-Vorhersageeinheit beruht,

wobei die Handelsbereichsfragmentierungs-Vorhersageeinheit ein Muster von Marktfragmentierung für jedes vorbestimmte Mal, dass eine solche in der Vergangenheit eingetreten ist, beruhend auf einem Marktfragmentierungs-Ist-Wert, der ein vergangenes Marktfragmentierungsmuster-Ist-Ergebnis zwischen Bereichen angibt, identifiziert und das Muster der Marktfragmentierung des Vorhersagezielzeitraums beruhend auf Attributinformationen, die ein Faktor des Erzeugens des Musters der Marktfragmentierung in jedem Zeitbereich sind, und Attributinformationen über den Vorhersagezielzeitraum identifiziert, und
wobei die Attributinformationen eine Temperatur umfassen.

2. Stromhandelsunterstützungsvorrichtung nach Anspruch 1,
wobei die Handelsbereichsfragmentierungs-Vorhersageeinheit ein dominierendes Attribut, das ein Faktor des Erzeugens des Musters der Marktfragmentierung in jedem Zeitraum ist, über Bestimmungsbaum-Lernen bestimmt, die Ereignis-Wahrscheinlichkeit des Marktfragmentierungsmusters beruhend auf einem Element, das in einem über das Bestimmungsbaumlernen erzeugten Endknoten vorhanden ist, berechnet und eine Benachrichtigungseinheit anweist, einen Benutzer der berechneten Ereignis-Wahrscheinlichkeit zu benachrichtigen.

3. Stromhandelsunterstützungsvorrichtung nach Anspruch 1,
wobei die Handelsbereichsfragmentierungs-Vorhersageeinheit bestimmt, dass sich eine Marktfragmentierung zwischen Bereichen nicht ereignet, in einem Fall, in dem die Verbindungsleitungs-Freikapazität ein Schwellenwert oder höher ist, und bestimmt, dass eine Marktfragmentierung zwischen Bereichen eintritt, in einem Fall, in dem die Verbindungsleitungs-Freikapazität niedriger als der Schwellenwert ist.

4. Stromhandelsunterstützungsvorrichtung nach Anspruch 1,
wobei die Handelsbereichsfragmentierungs-Vorhersageeinheit eine Benachrichtigungsvorrichtung anweist, einen Benutzer darüber zu benachrichtigen, ob ein Eintreten einer Markfragmentierung zwischen Bereichen vorhergesagt ist.

5. Stromhandelsunterstützungsvorrichtung nach Anspruch 1,
wobei die Marktpreisvorhersageeinheit beruhend auf Zeitreihen-Vertragspreisdaten für jeden Bereich in einem vorbestimmten Zeitraum und Attributinformationen über den Vorhersagezielzeitraum eine Cluster-Bildung der Zeitserien-Vertragspreisdaten durchführt und eine Preisvorhersagekurve beruhend auf vergangenen Zeitserien-Vertragspreisdaten und einem Element, das zu jedem Cluster gehört, erstellt.

6. Stromhandelsunterstützungsvorrichtung nach Anspruch 5,
wobei die Marktpreisvorhersageeinheit einen Ereignis-Zeitbereich, in dem das Ereignis einer Marktfragmentierung durch die Handelsbereichsfragmentierungs-Vorhersageeinheit vorhergesagt wird, oder einen Nicht-Ereignis-Zeitbereich, in dem kein Ereignis einer Marktfragmentierung durch die Handelsbereichsfragmentierungs-Vorhersageeinheit vorhergesagt wird, eines Bereichs in der Preisvorhersagekurve mit einem vorbestimmten Koeffizienten multipliziert.

7. Stromhandelsunterstützungsvorrichtung nach Anspruch 1, ferner umfassend:
eine Gebotsplanungseinheit, die einen Gebotspreis beruhend auf einem Vorhersageergebnis von der Handelsbereichsfragmentierungs-Vorhersageeinheit, einem von der Marktpreis-Vorhersageeinheit berechneten Marktpreis-Vorhersagewert und Stromerzeugungskosten des eigenen Unternehmens berechnet.

8. Stromhandelsunterstützungsvorrichtung nach Anspruch 7,
wobei die Gebotsplanungseinheit erwartete Kosten für jedes Beschaffungsmittel mittels eines Beschaffungsrisikokoeffizienten, der sich auf die Beschaffungsmittel bezieht, und eines Fragmentierungsrisikokoeffizienten, der sich auf die Marktfragmentierung bezieht, berechnet und Beschaffungsmittel mit den niedrigsten erwarteten Kosten als Beschaffungsmittel bestimmt, die bei der Berechnung des Gebotspreises zu verwenden ist.

9. Stromhandelsunterstützungsvorrichtung nach Anspruch 8,
wobei die Gebotsplanungseinheit einen Gebotspreis beruhend auf den erwarteten Kosten der bestimmten Beschaffungsmittel, einer für ein eigenes Unternehmen erforderlichen Gebotshöhe und einem Sicherheitskoeffizienten zum Vermeiden eines Nichtzustandekommens von Handel berechnet.

10. Stromhandelsunterstützungsvorrichtung nach Anspruch 7,
wobei die Gebotsplanungseinheit einen Gebotspreis berechnet, für einen Fall, bei dem sich die von der Handelsbereichsfragmentierungs-Vorhersageeinheit getroffene Vorhersage als falsch erweist.

11. Stromhandelsunterstützungsvorrichtung nach Anspruch 1,
wobei die Akteursverhalten-Vorhersageeinheit eine Stromerzeugungsverhalten-Vorhersageeinheit umfasst, die ein Stromversorgungsausmaß des Vorhersagezielzeitraums berechnet, indem sie einen in der Zukunft zu betreibenden Generator beruhend auf Attributinformationen, die ein Faktor von Stromerzeugung sein kann, vorhersagt.

**12.** Stromhandelsunterstützungsvorrichtung nach Anspruch 1,
wobei die Physische-Markteinschränkungs-Vorhersageeinheit eine Verbindungsleitungs-Freikapazität-Vorhersageeinheit umfasst, welche die Verbindungsleitungs-Freikapazität beruhend auf einem Verbindungsleitungsplanungswert und einem Vorhersagewert für den Stromaustausch zwischen Bereichen vorhersagt.

**13.** Verfahren zur Erzeugung von Marktpreisvorhersageinformationen, wobei das Verfahren Folgendes umfasst:

einen ersten Schritt des Ermöglichens, dass eine Akteursverhalten-Vorhersageeinheit das Verhalten eines Akteurs vorhersagt und einen Auftragsempfangs- und -platzierungsinformationsvorhersagewert berechnet;
einen zweiten Schritt des Ermöglichens, dass eine Physische-Markteinschränkungs-Vorhersageeinheit einen Stromtransportpfad-Zustand vorhersagt, einschließlich einer Verbindungsleitungs-Freikapazität, welche die Stromübertragungskapazität zwischen Bereichen angibt, und einen Stromtransportpfad-Zustands-Vorhersagewert berechnet; und
einen dritten Schritt des Ermöglichens, dass eine Marktvorhersageeinheit einen Marktpreis beruhend auf dem Auftragsempfangs- und -platzierungsinformationsvorhersagewert und dem Stromtransportpfad-Zustands-Vorhersagewert vorhersagt,
wobei der dritte Schritt des Ermöglichens, dass die Marktvorhersageeinheit den Marktpreis vorhersagt, Folgendes umfasst:

Ermöglichen, dass eine Handelsbereichsfragmentierungs-Vorhersageeinheit beruhend auf einem Strombedarfsausmaß für jeden Bereich in einem Vorhersagezielzeitraum, der durch die Akteursverhalten-Vorhersageeinheit als der Auftragsempfangs- und -platzierungsinformationsvorhersagewert berechnet wird, einem Stromversorgungsausmaß für jeden Bereich im Vorhersagezielzeitraum und dem Stromtransportpfad-Zustands-Vorhersagewert vorhersagt, ob eine Marktfragmentierung zwischen Bereichen eintritt, wobei eine Marktfragmentierung eintritt, wenn ein geplanter Wert eines Stromaustauschausmaßes zwischen Bereichen die Verbindungsleitungs-Freikapazität zwischen den Bereichen übersteigt, und
Ermöglichen, dass eine Marktpreisvorhersageeinheit einen Marktpreisvorhersagewert berechnet, welcher einen Marktpreis in jedem Bereich im Vorhersagezielzeitraum angibt, beruhend auf einem Vorhersageergebnis von der Handelsbereichsfragmentierungs-Vorhersageeinheit,

wobei die Handelsbereichsfragmentierungs-Vorhersageeinheit ein Muster von Marktfragmentierung für jedes vorbestimmte Mal, dass eine solche in der Vergangenheit eingetreten ist, beruhend auf einem Marktfragmentierungs-Ist-Wert, der ein vergangenes Marktfragmentierungsmuster-Ist-Ergebnis zwischen Bereichen angibt, identifiziert und das Muster der Marktfragmentierung des Vorhersagezielzeitraums beruhend auf Attributinformationen, die ein Faktor des Erzeugens des Musters der Marktfragmentierung in jedem Zeitbereich sind, und Attributinformationen über den Vorhersagezielzeitraum identifiziert, und
wobei die Attributinformationen eine Temperatur umfassen.

## Revendications

**1.** Dispositif d'assistance au commerce d'énergie, comprenant :

une unité de prédiction de comportement d'acteur qui prédit le comportement d'un acteur et calcule une valeur de prédiction d'informations de réception et de passation d'ordres ;
une unité de prédiction de restrictions physiques de marché qui prédit l'état de chemin de transport d'énergie, incluant une capacité libre de lignes d'interconnexion qui indique une capacité de transmission d'énergie entre des zones, et calcule une valeur de prédiction d'état de chemin de transport d'énergie; et
une unité de prédiction de marché qui prédit un prix de marché sur la base de la valeur de prédiction d'informations de réception et de passation d'ordres et de la valeur de prédiction d'état de chemin de transport d'énergie,
dans laquelle l'unité de prédiction de marché comprend :

une unité de prédiction de fragmentation de zone de commerce qui prédit si une fragmentation de marché entre des zones se produit, sur la base d'une quantité de demande d'énergie pour chaque zone dans une période cible de prédiction, qui est calculée par l'unité de prédiction de comportement d'acteur en tant que la valeur de prédiction d'informations de réception et de passation d'ordres, d'une quantité de fourniture d'énergie pour chaque zone au cours de la période cible de prédiction, et de la valeur de prédiction d'état de chemin de transport d'énergie, dans laquelle une fragmentation de marché se produit lorsqu'une valeur planifiée d'une quantité d'échange d'énergie entre des zones dépasse la capacité libre de lignes d'interconnexion entre les zones, et

une unité de prédiction de prix de marché qui calcule une valeur de prédiction de prix de marché indiquant un prix de marché dans chaque zone au cours de la période cible de prédiction sur la base d'un résultat de prédiction provenant de l'unité de prédiction de fragmentation de zone de commerce,

dans laquelle l'unité de prédiction de fragmentation de zone de commerce identifie un modèle de fragmentation de marché pour chaque heure prédéterminée, qui s'est produit dans le passé, sur la base d'une valeur réelle de modèle de fragmentation de marché indiquant un résultat réel de modèle de fragmentation de marché antérieur entre des zones, et identifie le modèle de fragmentation de marché de la période cible de prédiction sur la base d'informations d'attributs, correspondant à un facteur de génération du modèle de fragmentation de marché dans chaque plage de temps, et d'informations d'attributs sur la période cible de prédiction, et

dans lesquelles les informations d'attributs comprennent une température.

2. Dispositif d'assistance au commerce d'énergie selon la revendication 1,
dans lequel l'unité de prédiction de fragmentation de zone de commerce détermine un attribut dominant, qui est un facteur de génération du modèle de fragmentation de marché dans chaque plage de temps, par le biais d'un apprentissage par arbre de décision, calcule une probabilité d'occurrence du modèle de fragmentation de marché sur la base d'un membre existant dans un nœud terminal généré par le biais de l'apprentissage par arbre de décision, et ordonne à un dispositif de notification de notifier à un utilisateur la probabilité d'occurrence calculée.

3. Dispositif d'assistance au commerce d'énergie selon la revendication 1,
dans lequel l'unité de prédiction de fragmentation de zone de commerce détermine qu'une fragmentation de marché entre des zones ne se produit pas dans le cas où la capacité libre de lignes d'interconnexion est égale ou supérieure à une valeur de seuil, et détermine que la fragmentation de marché entre des zones se produit dans le cas où la capacité libre de lignes d'interconnexion est inférieure à la valeur de seuil.

4. Dispositif d'assistance au commerce d'énergie selon la revendication 1,
dans lequel l'unité de prédiction de fragmentation de zone de commerce ordonne à un dispositif de notification de notifier à un utilisateur s'il existe une occurrence prédite d'une fragmentation de marché entre des zones.

5. Dispositif d'assistance au commerce d'énergie selon la revendication 1,
dans lequel l'unité de prédiction de prix de marché effectue, sur la base de données de prix contractuels chronologiques pour chaque zone au cours d'une période prédéterminée et d'informations d'attributs sur la période cible de prédiction, un regroupement des données de prix contractuels chronologiques, et prépare une courbe de prédiction de prix sur la base des données de prix contractuels chronologiques antérieures et d'un membre appartenant à chaque groupe.

6. Dispositif d'assistance au commerce d'énergie selon la revendication 5,
dans lequel l'unité de prédiction de prix de marché multiplie une plage de temps d'occurrence, dans laquelle l'occurrence d'une fragmentation de marché est prédite par l'unité de prédiction de fragmentation de zone de commerce, ou une plage de temps de non-occurrence, dans laquelle l'occurrence d'une fragmentation de marché n'est pas prédite par l'unité de prédiction de fragmentation de zone de commerce, d'une zone dans la courbe de prédiction de prix, par un coefficient prédéterminé.

7. Dispositif d'assistance au commerce d'énergie selon la revendication 1, comprenant en outre :
une unité de planification d'offres d'achat qui calcule un prix d'offre d'achat sur la base d'un résultat de prédiction provenant de l'unité de prédiction de fragmentation de zone de commerce, d'une valeur de prédiction de prix de marché calculée par l'unité de prédiction de prix de marché et d'un coût de production d'énergie propre à une société.

8. Dispositif d'assistance au commerce d'énergie selon la revendication 7,
dans lequel l'unité de planification d'offres d'achat calcule un coût prévu pour chaque moyen d'approvisionnement à l'aide d'un coefficient de risque d'approvisionnement connexe au moyen d'approvisionnement et d'un coefficient de risque de fragmentation connexe à une fragmentation de marché, et détermine le moyen d'approvisionnement ayant le coût prévu le plus bas comme moyen d'approvisionnement à utiliser dans le calcul de prix d'offre d'achat.

9. Dispositif d'assistance au commerce d'énergie selon la revendication 8,
dans lequel l'unité de planification d'offres d'achat calcule un prix d'offre d'achat sur la base du coût prévu du moyen d'approvisionnement déterminé, d'un montant d'offre d'achat requis pour la propre société, et d'un coefficient de sécurité permettant d'éviter la non-conclusion d'une transaction commerciale.

10. Dispositif d'assistance au commerce d'énergie selon la revendication 7, dans lequel l'unité de planification d'offres d'achat calcule un prix d'offre d'achat dans le cas où la prédiction effectuée par l'unité de prédiction de fragmentation de zone de commerce s'avère erronée.

11. Dispositif d'assistance au commerce d'énergie selon la revendication 1, dans lequel l'unité de prédiction de comportement d'acteur comprend une unité de prédiction de comportement de production d'énergie qui calcule une quantité de fourniture d'énergie de la période cible de prédiction en prédisant un générateur qui sera exploité dans le futur sur la base d'informations d'attributs pouvant correspondre à un facteur de production d'énergie.

12. Dispositif d'assistance au commerce d'énergie selon la revendication 1, dans lequel l'unité de prédiction de restrictions physiques de marché comprend une unité de prédiction de capacité libre de lignes d'interconnexion qui prédit la capacité libre de lignes d'interconnexion sur la base d'une valeur planifiée de lignes d'interconnexion et d'une valeur de prédiction d'échange d'énergie entre des zones.

13. Procédé de génération d'informations de prédiction de prix de marché, comprenant :

une première étape consistant à permettre à une unité de prédiction de comportement d'acteur de prédire le comportement d'un acteur et de calculer une valeur de prédiction d'informations de réception et de passation d'ordres ;
une deuxième étape consistant à permettre à une unité de prédiction de restrictions physiques de marché de prédire un état de chemin de transport d'énergie, incluant une capacité libre de lignes d'interconnexion qui indique une capacité de transmission d'énergie entre des zones, et de calculer une valeur de prédiction d'état de chemin de transport d'énergie; et
une troisième étape consistant à permettre à une unité de prédiction de marché de prédire un prix de marché sur la base de la valeur de prédiction d'informations de réception et de passation d'ordres et de la valeur de prédiction d'état de chemin de transport d'énergie;
dans laquelle la troisième étape consistant à permettre à l'unité de prédiction de marché de prédire le prix de marché comprend le fait de :

permettre à une unité de prédiction de fragmentation de zone de commerce de prédire si une fragmentation de marché entre des zones se produit sur la base d'une quantité de demande d'énergie pour chaque zone dans une période cible de prédiction, qui est calculée par l'unité de prédiction de comportement d'acteur comme la valeur de prédiction d'informations de réception et de passation d'ordres, d'une quantité de fourniture d'énergie pour chaque zone au cours de la période cible de prédiction, et de la valeur de prédiction d'état de chemin de transport d'énergie, dans laquelle une fragmentation de marché se produit lorsqu'une valeur planifiée d'une quantité d'échange d'énergie entre des zones dépasse une capacité libre de lignes d'interconnexion entre les zones, et
permettre à une unité de prédiction de prix de marché de calculer une valeur de prédiction de prix de marché indiquant un prix de marché dans chaque zone au cours de la période cible de prédiction, sur la base d'un résultat de prédiction provenant de l'unité de prédiction de fragmentation de zone de commerce,

dans lequel l'unité de prédiction de fragmentation de zone de commerce identifie un modèle de fragmentation de marché pour chaque heure prédéterminée, qui s'est produit dans le passé, sur la base d'une valeur réelle de modèle de fragmentation de marché indiquant un résultat réel de modèle de fragmentation de marché antérieur entre des zones, et identifie le modèle de fragmentation de marché de la période cible de prédiction sur la base d'informations d'attributs, correspondant à un facteur de génération du modèle de fragmentation de marché dans chaque plage de temps, et d'informations d'attributs sur la période cible de prédiction, et
dans lesquelles les informations d'attributs comprennent une température.

[Fig. 1]

POWER TRADING ASSISTANCE DEVICE 1

PLAYER BEHAVIOR PREDICTING UNIT 11

ORDER RECEIVING AND PLACING INFORMATION PREDICTION VALUE

MARKET PHYSICAL RESTRICTION PREDICTING UNIT 12

POWER TRANSPORTATION PATH STATE PREDICTION VALUE

MARKET PREDICTING UNIT 13

MARKET PRICE PREDICTION VALUE

[Fig. 2]

POWER TRADING ASSISTANCE DEVICE

1

11

PLAYER BEHAVIOR
PREDICTING UNIT

ORDER RECEIVING AND
PLACING INFORMATION
PREDICTION VALUE

13

MARKET PREDICTING UNIT

21

TRADING AREA
FRAGMENTATION
PREDICTING UNIT

MARKET PRICE PREDICTION VALUE

12

MARKET PHYSICAL
RESTRICTION PREDICTING
UNIT

POWER TRANSPORTATION
PATH STATE PREDICTION
VALUE

28

[Fig. 3]

| | | | | |
|---|---|---|---|---|
| AREA C | AREA E | AREA F | AREA H | AREA I |
| AREA B | AREA D | | AREA G | |
| AREA A | | | | |

INTERCONNECTION LINE
(BETWEEN AREAS A AND B)

[Fig. 4]

[Fig. 5]

PROFILING PROCESSING OF GENERATOR OPERATION PATTERN

START

ACQUISITION OF ATTRIBUTES WHICH ARE CANDIDATES — S1001

DECISION OF ATTRIBUTE OF EACH CLUSTER THROUGH DECISION TREE LEARNING — S1002

END

[Fig. 6]

GENERATOR OPERATION PREDICTION ATTRIBUTE INFORMATION TABLE

101

| DATE AND TIME | ITEM (ATTRIBUTE) | VALUE |
|---|---|---|
| 2016/1/1 0:00 | TEMPERATURE | 21.5 |
| | DAY TYPE | 1 |
| | AREA DEMAND AMOUNT | 3466 |
| | GENERATOR A PLANNED STOP FORECAST VALUE | OPERATION |
| | GENERATOR B PLANNED STOP FORECAST VALUE | NON-OPERATION |
| | . . . | . . . |
| 2016/1/1 0:30 | TEMPERATURE | 21.5 |
| | DAY TYPE | 1 |
| | AREA DEMAND AMOUNT | 3466 |
| | GENERATOR A PLANNED STOP FORECAST VALUE | OPERATION |
| | GENERATOR B PLANNED STOP FORECAST VALUE | NON-OPERATION |
| | . . . | . . . |
| . . . | . . . | . . . |

| DAY TYPE ID | VALUE |
|---|---|
| 1 | WEEKDAY |
| 2 | HOLIDAY |
| 3 | SPECIAL DAY |
| . . . | . . . |

[Fig. 7]

[Fig. 8]

DIAGNOSIS DECISION TREE GENERATION PROCESSING

START

FIRST DIAGNOSIS DECISION TREE
GENERATION PROCESSING    S1011

SHOULD
SECOND DIAGNOSIS DECISION
TREE BE PREPARED?    S1012

No

Yes

SECOND DIAGNOSIS DECISION
TREE GENERATION PROCESSING    S1013

END

[Fig. 9]

FIRST DIAGNOSIS DECISION TREE GENERATION PROCESSING

START

ACQUIRE ATTRIBUTE ITEM {$A_i$} AND GENERATOR OPERATION PATTERN INFORMATION {$X_k$} — S1021

SELECT ONE UNPROCESSED NODE — S1022

IS ATTRIBUTE ITEM {$A_i$} EMPTY SET? — S1023

Yes → SET TARGET NODE AS LEAF — S1024

No

CALCULATE AVERAGE INFORMATION AMOUNT — S1025

SELECT ONE ATTRIBUTE ITEM $A_i$ — S1026

CALCULATE SET OF CLUSTERS IN SUBSET OF USER, WHICH HAS EACH ATTRIBUTE VALUE — S1027

CALCULATE DECREASE IN INFORMATION AMOUNT OF ATTRIBUTE ITEM $A_i$ (INFORMATION GAIN) — S1028

ARE ALL ATTRIBUTE ITEMS COMPLETED? — S1029

No

Yes

SET ATTRIBUTE ITEM $A_i^*$ HAVING GREATEST INFORMATION GAIN TO PRESENT NODE — S1030

ADD CHILD NODE FOR EACH OF ATTRIBUTE VALUES INCLUDED IN $A_i^*$ — S1031

SET CLUSTER SET AND ATTRIBUTE ITEM SET TO BE INPUT INTO EACH CHILD NODE — S1032

IS PROCESSING FINISHED FOR ALL NODES? — S1033

No

Yes

END

[Fig. 10]

SECOND DIAGNOSIS DECISION TREE GENERATION PROCESSING

```
                    ┌─────────────┐
                    │    START    │
                    └─────────────┘
                           │
                           ▼
         ┌──────────────────────────────────┐  S1041
         │ ACQUIRE ATTRIBUTE ITEM {Bi} AND   │
         │ GENERATOR OPERATION PATTERN       │
         │ INFORMATION {Xk}                  │
         └──────────────────────────────────┘
                           │
                           ▼
         ┌──────────────────────────────────┐  S1042
         │   SELECT ONE UNPROCESSED NODE     │
         └──────────────────────────────────┘
                           │
                           ▼
                  ╱─────────────────╲  S1043        Yes
                 ╱  IS ATTRIBUTE ITEM ╲──────────────────┐
                 ╲   {Bi} EMPTY SET?  ╱                  │
                  ╲─────────────────╱                    │
                           │ No                          │
                           ▼                             ▼
         ┌──────────────────────────────┐ S1045  ┌──────────────────────────┐ S1044
         │ CALCULATE AVERAGE INFORMATION│        │  SET TARGET NODE AS LEAF │
         │          AMOUNT              │        └──────────────────────────┘
         └──────────────────────────────┘                │
                           │                              │
                           ▼                              │
         ┌──────────────────────────────┐ S1046          │
         │  SELECT ONE ATTRIBUTE ITEM Bi │                │
         └──────────────────────────────┘                │
                           │                              │
                           ▼                              │
         ┌──────────────────────────────┐ S1047          │
         │ CALCULATE SET OF CLUSTERS IN  │                │
         │ SUBSET OF USER, WHICH HAS EACH│                │
         │ ATTRIBUTE VALUE               │                │
         └──────────────────────────────┘                │
                           │                              │
                           ▼                              │
         ┌──────────────────────────────┐ S1048          │
         │ CALCULATE DECREASE IN         │                │
         │ INFORMATION AMOUNT OF         │                │
         │ ATTRIBUTE ITEM Bi             │                │
         │ (INFORMATION GAIN)            │                │
         └──────────────────────────────┘                │
                           │                              │
                           ▼                              │
            No    ╱─────────────────╲  S1049              │
        ┌─────────   ARE ALL         ╲                    │
        │        ╲ ATTRIBUTE ITEMS   ╱                    │
        │         ╲  COMPLETED?     ╱                     │
        │          ╲───────────────╱                      │
        │                  │ Yes                          │
        │                  ▼                              │
        │   ┌──────────────────────────────┐ S1050        │
        │   │ SET ATTRIBUTE ITEM Bi* HAVING │              │
        │   │ GREATEST INFORMATION GAIN TO  │              │
        │   │ PRESENT NODE                  │              │
        │   └──────────────────────────────┘              │
        │                  │                              │
        │                  ▼                              │
        │   ┌──────────────────────────────┐ S1051        │
        │   │ ADD CHILD NODE FOR EACH OF    │              │
        │   │ ATTRIBUTE VALUES INCLUDED IN  │              │
        │   │ Bi*                           │              │
        │   └──────────────────────────────┘              │
        │                  │                              │
        │                  ▼                              │
        │   ┌──────────────────────────────┐ S1052        │
        │   │ SET CLUSTER SET AND ATTRIBUTE │              │
        │   │ ITEM SET TO BE INPUT INTO     │              │
        │   │ EACH CHILD NODE               │              │
        │   └──────────────────────────────┘              │
        │                  │◄─────────────────────────────┘
        │                  ▼
   No   │          ╱─────────────────╲  S1053
  ┌─────────────   IS PROCESSING      ╲
  │     │        ╲ FINISHED FOR ALL   ╱
  │     │         ╲    NODES?        ╱
  │     │          ╲───────────────╱
  │     │                  │ Yes
  │     │                  ▼
  │     │          ┌─────────────┐
  │     │          │     END     │
  │     │          └─────────────┘
```

[Fig. 11]

GENERATOR OPERATION PREDICTION ATTRIBUTE INFORMATION PREDICTION VALUE TABLE _102

| DATE AND TIME | ITEM (ATTRIBUTE) | VALUE |
|---|---|---|
| 2017/1/1 0:00 | TEMPERATURE | 21.5 |
| | DAY TYPE | 1 |
| | AREA DEMAND AMOUNT | 3466 |
| | GENERATOR A PLANNED STOP FORECAST VALUE | OPERATION |
| | GENERATOR B PLANNED STOP FORECAST VALUE | NON-OPERATION |
| | . . . | . . . |
| 2017/1/1 0:30 | TEMPERATURE | 21.5 |
| | DAY TYPE | 1 |
| | AREA DEMAND AMOUNT | 3466 |
| | GENERATOR A PLANNED STOP FORECAST VALUE | OPERATION |
| | GENERATOR B PLANNED STOP FORECAST VALUE | NON-OPERATION |
| | . . . | . . . |
| . . . | . . . | . . . |

| DAY TYPE ID | VALUE |
|---|---|
| 1 | WEEKDAY |
| 2 | HOLIDAY |
| 3 | SPECIAL DAY |
| . . . | . . . |

[Fig. 12]

AREA DEMAND

PLANNED STOP
INFORMATION

POWER GENERATION
BEHAVIOR PREDICTING
UNIT

51

SUPPLY CAPACITY
PREDICTION VALUE

TRADING AREA
FRAGMENTATION
PREDICTING UNIT

52

DETERMINING UNIT FOR
CORRECTION COEFFICIENT
ACCORDING TO MARKET
FRAGMENTATION PATTERN

53

AREA PRICE
PREDICTING UNIT

54

AREA PRICE
PREDICTION VALUE
(PLURALITY OF
CANDIDATES)

INTERCONNECTION LINE PLANNED VALUE

AREA PRICE ACTUAL RESULT

[Fig. 13]

POWER TRADING ASSISTANCE DEVICE — 60

STORAGE DEVICE — 62

CPU — 61

COMMUNICATION DEVICE — 63

INPUT AND OUTPUT DEVICE — 64

601 DEMAND PREDICTION INFORMATION TABLE

602 GENERATOR INFORMATION TABLE

603 GENERATOR PLANNED STOP INFORMATION TABLE

604 SUPPLY CAPACITY PREDICTION INFORMATION TABLE

605 INTERCONNECTION LINE EMPTY CAPACITY INFORMATION TABLE

606 MARKET FRAGMENTATION PREDICTION VALUE TABLE

607 CONTRACT PRICE ACTUAL RESULT INFORMATION TABLE

608 ATTRIBUTE INFORMATION TABLE

609 AREA PRICE PREDICTION VALUE TABLE

610 BID DETERMINATION VALUE TABLE

611 MARKET FRAGMENTATION ACTUAL RESULT TABLE

612 MARKET FRAGMENTATION PATTERN INFORMATION TABLE

613 DAILY CLASSIFICATION INFORMATION TABLE

[Fig. 14]

POWER TRADING ASSISTANCE DEVICE 60

71 TRADING AREA FRAGMENTATION PREDICTING UNIT

- 71a DEMAND PREDICTING UNIT
- 71b MARKET SUPPLY CAPACITY PREDICTING UNIT
- 71c FRAGMENTATION OCCURRENCE PREDICTING UNIT
- 71d MARKET FRAGMENTATION WARNING UNIT

72 MARKET PRICE PREDICTING UNIT

- 72a CLUSTERING EXECUTION UNIT
- 72b PROFILING PROCESSING UNIT
- 72c PREDICTION CURVE PREPARING UNIT
- 72d PREDICTION CURVE CORRECTING UNIT

73 BIDDING PLANNING UNIT

- 73a OWN COMPANY POWER GENERATION COST ASSUMING UNIT
- 73b PROCUREMENT MEANS DETERMINING UNIT
- 73c BIDDING PRICE AND BIDDING AMOUNT DETERMINING UNIT
- 73d ALTERNATIVE PLAN DETERMINING UNIT

[Fig. 15]

DEMAND PREDICTION INFORMATION TABLE

601

| AREA ID | ITEM | VALUE |
|---|---|---|
| AREA ID = 1 (HOKKAIDO AREA) | TIMESTAMP | {2017-01-01 09:00, 2017-01-01 09:30, ･･･} |
| | DEMAND AMOUNT [MWh] | {3417, 3374, ･･･} |
| AREA ID = 2 (TOHOKU AREA) | TIMESTAMP | {2015-01-02 09:00, 2015-01-02 09:05, ･･･} |
| | DEMAND AMOUNT [MWh] | {3566, 3432, ･･･} |
| ･･･ | ･･･ | ･･･ |

[Fig. 16]

GENERATOR INFORMATION TABLE

602

| AREA ID | GENERATOR ID | POWER PLANT NAME | GENERATOR UNIT | OUTPUT [kW] |
|---|---|---|---|---|
| AREA ID = 1 (HOKKAIDO AREA) | 1 | POWER PLANT A | UNIT 1 | 120000 |
| | 2 | POWER PLANT A | UNIT 2 | 120000 |
| | 3 | POWER PLANT B | UNIT 1 | 350000 |
| | ... | ... | ... | ... |
| AREA ID = 2 (TOHOKU AREA) | 21 | POWER PLANT E | UNIT 1 | 600000 |
| | 22 | POWER PLANT F | UNIT 1 | 400000 |
| | ... | ... | ... | ... |
| ... | ... | ... | ... | ... |

[Fig. 17]

GENERATOR PLANNED STOP INFORMATION TABLE

603

| AREA ID | GENERATOR ID | POWER PLANT NAME | GENERATOR UNIT | OUTPUT | DATE AND TIME OF STOP | SCHEDULED DATE OF RESTORATION |
|---|---|---|---|---|---|---|
| AREA ID = 1 (HOKKAIDO AREA) | 2 | POWER PLANT A | 2 | 120000 | 2017/1/18 0:00 | 2017/1/19 |
| | 3 | POWER PLANT B | 1 | 350000 | 2017/1/21 0:00 | 2017/1/22 |
| AREA ID = 2 (TOHOKU AREA) | 21 | POWER PLANT E | 1 | 600000 | 2017/1/23 0:00 | 2017/1/25 |
| | 25 | POWER PLANT H | 1 | 600000 | 2017/2/4 0:00 | 2017/2/11 |
| ... | ... | ... | | ... | ... | ... |

[Fig. 18]

SUPPLY CAPACITY PREDICTION INFORMATION TABLE

604

| AREA ID | ITEM | VALUE |
|---|---|---|
| AREA ID = 1<br>(HOKKAIDO AREA) | TIMESTAMP | {2017-01-01 09:00, 2017-01-01 09:30, ...} |
| | SUPPLY LIMIT AMOUNT [MWh] | {3800, 3800, ...} |
| AREA ID = 2<br>(TOHOKU AREA) | TIMESTAMP | {2015-01-02 09:00, 2015-01-02 09:05, ...} |
| | SUPPLY LIMIT AMOUNT [MWh] | {4200, 4200, ...} |
| ... | ... | ... |

[Fig. 19]

INTERCONNECTION LINE EMPTY CAPACITY INFORMATION TABLE

605

| INTERCONNECTION LINE ID | ITEM | VALUE |
|---|---|---|
| INTERCONNECTION LINE ID = 1 (BETWEEN HOKKAIDO AND HONSHU) | TIMESTAMP | {2017-01-01 09:00, 2017-01-01 09:30, ···} |
| | INTERCONNECTION LINE EMPTY CAPACITY AMOUNT [MWh] | {669.9, 719.9, ···} |
| AREA ID = 2 (BETWEEN TOHOKU AND TOKYO) | TIMESTAMP | {2015-01-02 09:00, 2015-01-02 09:05, ···} |
| | SUPPLY LIMIT AMOUNT [MWh] | {1574.2, 1568.5, ···} |
| ... | ... | ... |

[Fig. 20]

MARKET FRAGMENTATION PREDICTION VALUE TABLE
                                                                                          606

| INTERCONNECTION LINE ID | DATE AND TIME: 2017/1/1 0:00 | | DATE AND TIME: 2017/1/1 0:30 | | ... |
| | AREA FRAGMENTATION OCCURRENCE | AREA FRAGMENTATION OCCURRENCE PROBABILITY | AREA FRAGMENTATION OCCURRENCE | AREA FRAGMENTATION OCCURRENCE PROBABILITY | ... |
|---|---|---|---|---|---|
| INTERCONNECTION LINE ID = 1 (BETWEEN HOKKAIDO AND HONSHU) | YES | 60% | YES | 90% | ... |
| INTERCONNECTION LINE ID = 2 (BETWEEN TOHOKU AND TOKYO) | NO | 0% | NO | 0% | ... |
| INTERCONNECTION LINE ID = 3 (BETWEEN TOKYO AND CHUBU) | NO | 0% | NO | 0% | ... |
| INTERCONNECTION LINE ID = 4 (BETWEEN CHUBU AND KANSAI) | NO | 0% | NO | 0% | ... |
| INTERCONNECTION LINE ID = 5 (BETWEEN CHUGOKU AND HOKURIKU) | NO | 0% | NO | 0% | ... |
| INTERCONNECTION LINE ID = 6 (BETWEEN HOKURIKU AND KANSAI) | NO | 0% | NO | 0% | ... |
| INTERCONNECTION LINE ID = 7 (BETWEEN KANSAI AND CHUGOKU) | NO | 0% | NO | 0% | ... |
| INTERCONNECTION LINE ID = 8 (BETWEEN KANSAI AND SHIKOKU) | NO | 0% | NO | 0% | ... |
| INTERCONNECTION LINE ID = 9 (BETWEEN CHUGOKU AND SHIKOKU) | NO | 0% | NO | 0% | ... |
| INTERCONNECTION LINE ID = 10 (BETWEEN CHUGOKU AND KYUSHU) | NO | 0% | NO | 0% | ... |

[Fig. 21]

CONTRACT PRICE ACTUAL RESULT INFORMATION TABLE 607

| AREA ID | ITEM | VALUE |
|---------|------|-------|
| AREA ID = 1 (HOKKAIDO AREA) | TIMESTAMP | {2016-01-01 09:00, 2016-01-01 09:30, ···} |
| | CONTRACT PRICE [YEN] | {12, 13, ···} |
| AREA ID = 2 (TOHOKU AREA) | TIMESTAMP | {2016-01-01 09:00, 2016-01-01 09:30, ···} |
| | CONTRACT PRICE [YEN] | {9, 10, ···} |
| ... | ... | ... |

[Fig. 22]

ATTRIBUTE INFORMATION TABLE                                    608

| DATE AND TIME | ITEM (ATTRIBUTE) | VALUE |
|---|---|---|
| 2016/1/1 0:00 | TEMPERATURE | 21.5 |
| | DAY TYPE | 1 |
| | AREA 1 DEMAND AMOUNT | 3466 |
| | AREA 2 DEMAND AMOUNT | 4399 |
| | · · · | · · · |
| | INTERCONNECTION LINE 1 EMPTY CAPACITY | YES |
| | INTERCONNECTION LINE 2 EMPTY CAPACITY | NO |
| | · · · | · · · |
| | AREA 1 SUPPLY CAPACITY | 4033 |
| | AREA 2 SUPPLY CAPACITY | 4600 |
| | · · · | · · · |
| 2016/1/1 0:30 | TEMPERATURE | 20.7 |
| | DAY TYPE | 1 |
| | AREA 1 DEMAND AMOUNT | 3466 |
| | AREA 2 DEMAND AMOUNT | 4399 |
| | · · · | · · · |
| | INTERCONNECTION LINE 1 EMPTY CAPACITY | YES |
| | INTERCONNECTION LINE 2 EMPTY CAPACITY | NO |
| | · · · | · · · |
| | AREA 1 SUPPLY CAPACITY | 4033 |
| | AREA 2 SUPPLY CAPACITY | 4600 |
| · · · | · · · | · · · |

| DAY TYPE ID | VALUE |
|---|---|
| 1 | WEEKDAY |
| 2 | HOLIDAY |
| 3 | SPECIAL DAY |
| · · · | · · · |

[Fig. 23]

AREA PRICE PREDICTION VALUE TABLE

609

| AREA ID | ITEM | VALUE |
|---|---|---|
| AREA ID = 1 (HOKKAIDO AREA) | TIMESTAMP | {2017-01-01 09:00, 2017-01-01 09:30, ···} |
| | AREA PRICE PREDICTION VALUE [YEN] | {12, 13, ···} |
| | | {10, 14, ···} |
| | | {11, 12, ···} |
| | | ··· |
| AREA ID = 2 (TOHOKU AREA) | TIMESTAMP | {2017-01-01 09:00, 2015-01-01 09:30, ···} |
| | AREA PRICE PREDICTION VALUE [YEN] | {9, 10, ···} |
| ··· | ··· | ··· |

[Fig. 24]

BID DETERMINATION VALUE TABLE

610

| ITEM | VALUE |
|------|-------|
| TIMESTAMP | {2017-01-01 09:00, 2017-01-01 09:30, ・・・} |
| BIDDING PRICE [YEN] | {10, 20, ・・・} |
| BIDDING AMOUNT [MWh] | {200, 100, ・・・} |

[Fig. 25]

MARKET FRAGMENTATION ACTUAL RESULT TABLE

611

| ITEM | VALUE |
|---|---|
| TIMESTAMP | {2017-01-01 09:00, 2017-01-01 09:30, 2017-01-01 10:00, ···} |
| MARKET FRAGMENTATION PATTERN ID NUMBER | {2, 2, 1, ···} |

[Fig. 26]

MARKET FRAGMENTATION PATTERN INFORMATION TABLE

612

| FRAGMENTATION PATTERN ID | HOKKAIDO | TOHOKU | TOKYO | CHUBU | HOKURIKU | KANSAI | CHUGOKU | SHIKOKU | KYUSHU |
|---|---|---|---|---|---|---|---|---|---|
| 1 | 1 | 1 | 1 | 1 | 1 | 1 | 1 | 1 | 1 |
| 2 | 1 | 1 | 1 | 2 | 2 | 2 | 2 | 2 | 2 |
| 3 | 1 | 2 | 2 | 2 | 2 | 2 | 2 | 2 | 2 |
| 4 | 1 | 2 | 2 | 3 | 3 | 3 | 3 | 3 | 3 |
| 5 | 1 | 2 | 2 | 3 | 3 | 3 | 3 | 3 | 4 |
| 6 | 1 | 2 | 2 | 2 | 2 | 2 | 2 | 2 | 3 |
| 7 | 1 | 1 | 1 | 1 | 1 | 1 | 1 | 1 | 2 |
| 8 | 1 | 1 | 1 | 2 | 2 | 2 | 2 | 2 | 3 |
| 9 | 1 | 2 | 3 | 3 | 3 | 3 | 3 | 3 | 3 |
| 10 | 1 | 1 | 2 | 2 | 2 | 2 | 2 | 2 | 2 |
| ... | ... | ... | ... | ... | ... | ... | ... | ... | ... |

[Fig. 27]

DAILY CLASSIFICATION INFORMATION TABLE (CLUSTERING RESULT)

613

| CLUSTER ID | ITEM | VALUE |
|---|---|---|
| CLUSTER k = 1 | SAMPLE DAY ID LIST | {1,2,5,11···} |
| CLUSTER k = 2 | SAMPLE DAY ID LIST | {3,4,7,5,9···} |
| ... | ... | ... |

[Fig. 28]

POWER TRADING ASSISTANCE PROCESSING

[Fig. 29]

MARKET FRAGMENTATION PREDICTION PROCESSING

START

DEMAND PREDICTION — S11

ACQUISITION OF SUPPLY PLAN DATA — S12

PREDICTION OF MARKET SUPPLY CAPACITY — S13

ACQUISITION OF MARKET FRAGMENTATION PATTERN ACTUAL VALUE — S14

ACQUISITION OF INTERCONNECTION LINE EMPTY CAPACITY PLANNED VALUE — S15

ACQUISITION OF ATTRIBUTE INFORMATION — S16

PREDICTION OF MARKET FRAGMENTATION PATTERN — S17

WARNING OF MARKET FRAGMENTATION OCCURRENCE — S18

END

[Fig. 30]

MARKET FRAGMENTATION
PATTERN PROFILING PROCESSING

[Fig. 31]

DIAGNOSIS DECISION TREE GENERATION PROCESSING

```
        ( START )
            │
            ▼
┌─────────────────────────┐
│ FIRST DIAGNOSIS DECISION TREE │  S31
│   GENERATION PROCESSING   │
└─────────────────────────┘
            │
            ▼
          ◇ SHOULD
 No      SECOND DIAGNOSIS DECISION    S32
    ◄──── TREE BE PREPARED? ◇
            │
           Yes
            ▼
┌─────────────────────────┐
│ SECOND DIAGNOSIS DECISION │  S33
│ TREE GENERATION PROCESSING │
└─────────────────────────┘
            │
            ▼
         ( END )
```

[Fig. 32]

FIRST DIAGNOSIS DECISION TREE GENERATION PROCESSING

START

ACQUIRE ATTRIBUTE ITEM $\{A_i\}$ AND MARKET FRAGMENTATION PATTERN $\{X_k\}$ — S41

SELECT ONE UNPROCESSED NODE — S42

IS ATTRIBUTE ITEM $\{A_i\}$ EMPTY SET? — S43 — Yes

No

CALCULATE AVERAGE INFORMATION AMOUNT — S45

SET TARGET NODE AS LEAF — S44

SELECT ONE ATTRIBUTE ITEM $A_i$ — S46

CALCULATE SET OF CLUSTERS IN SUBSET OF USER, WHICH HAS EACH ATTRIBUTE VALUE — S47

CALCULATE DECREASE IN INFORMATION AMOUNT OF ATTRIBUTE ITEM $A_i$ (INFORMATION GAIN) — S48

ARE ALL ATTRIBUTE ITEMS COMPLETED? — S49 — No

Yes

SET ATTRIBUTE ITEM $A_i^*$ HAVING GREATEST INFORMATION GAIN TO PRESENT NODE — S50

ADD CHILD NODE FOR EACH OF ATTRIBUTE VALUES INCLUDED IN $A_i^*$ — S51

SET CLUSTER SET AND ATTRIBUTE ITEM SET TO BE INPUT INTO EACH CHILD NODE — S52

IS PROCESSING FINISHED FOR ALL NODES? — S53 — No

Yes

END

[Fig. 33]

SECOND DIAGNOSIS DECISION TREE GENERATION PROCESSING

START

ACQUIRE ATTRIBUTE ITEM {$B_i$} AND MARKET FRAGMENTATION PATTERN {$X_k$} — S61

SELECT ONE UNPROCESSED NODE — S62

IS ATTRIBUTE ITEM {$B_i$} EMPTY SET? — S63 — Yes

No

CALCULATE AVERAGE INFORMATION AMOUNT — S65

SET TARGET NODE AS LEAF — S64

SELECT ONE ATTRIBUTE ITEM $B_i$ — S66

CALCULATE SET OF CLUSTERS IN SUBSET OF USER, WHICH HAS EACH ATTRIBUTE VALUE — S67

CALCULATE DECREASE IN INFORMATION AMOUNT OF ATTRIBUTE ITEM $B_i$ (INFORMATION GAIN) — S68

ARE ALL ATTRIBUTE ITEMS COMPLETED? — S69 — No

Yes

SET ATTRIBUTE ITEM $B_i$* HAVING GREATEST INFORMATION GAIN TO PRESENT NODE — S70

ADD CHILD NODE FOR EACH OF ATTRIBUTE VALUES INCLUDED IN $B_i$* — S71

SET CLUSTER SET AND ATTRIBUTE ITEM SET TO BE INPUT INTO EACH CHILD NODE — S72

IS PROCESSING FINISHED FOR ALL NODES? — S73 — No

Yes

END

[Fig. 34]

MARKET PRICE PREDICTION PROCESSING

```
                    ┌─────────────┐
                    │    START    │
                    └─────────────┘
                           │
                           ▼
        ┌──────────────────────────────────────┐  S91
        │  ACQUISITION OF PAST CONTRACT PRICE DATA │
        └──────────────────────────────────────┘
                           │
                           ▼
        ┌──────────────────────────────────────┐  S92
        │              CLUSTERING               │
        └──────────────────────────────────────┘
                           │
                           ▼
        ┌──────────────────────────────────────┐  S93
        │              PROFILING                │
        └──────────────────────────────────────┘
                           │
                           ▼
        ┌──────────────────────────────────────┐  S94
        │    MODEL PRICE CURVE PREPARATION FOR   │
        │   EACH DIAGNOSIS DECISION TREE NODE    │
        └──────────────────────────────────────┘
                           │
                           ▼
        ┌──────────────────────────────────────┐  S95
        │   DETERMINATION OF EXPANSION OR        │
        │     CONTRACTION COEFFICIENT            │
        └──────────────────────────────────────┘
                           │
                           ▼
        ┌──────────────────────────────────────┐  S96
        │   EXPANSION OR CONTRACTION OF          │
        │        MODEL PRICE CURVE               │
        └──────────────────────────────────────┘
                           │
                           ▼
        ┌──────────────────────────────────────┐  S97
        │  CORRECTION OF MARKET FRAGMENTATION    │
        │       PREDICTION INFORMATION           │
        └──────────────────────────────────────┘
                           │
                           ▼
        ┌──────────────────────────────────────┐  S98
        │  RECORDING OF AREA PRICE PREDICTION VALUE │
        └──────────────────────────────────────┘
                           │
                           ▼
                    ┌─────────────┐
                    │     END     │
                    └─────────────┘
```

[Fig. 35]

BIDDING PLANNING PROCESSING

START

ASSUMPTION OF OWN COMPANY POWER GENERATION COSTS — S101

ACQUISITION OF AREA PRICE PREDICTION VALUE AND MARKET FRAGMENTATION PREDICTION VALUE — S102

DETERMINATION OF POWER PROCUREMENT MEANS FOR EACH HOUR — S103

DETERMINATION OF BIDDING PRICE AND BIDDING AMOUNT FOR EACH HOUR — S104

PREPARATION OF ALTERNATIVE PLAN — S105

RECORDING OF BIDDING PLAN VALUE — S106

END

[Fig. 36]

[Fig. 37]

| INTERCONNECTION LINE ID | DATE AND TIME: 2017/1/1 0:00 | | DATE AND TIME: 2017/1/1 0:30 | | · · · |
|---|---|---|---|---|---|
| | AREA FRAGMENTATION OCCURRENCE | AREA FRAGMENTATION OCCURRENCE PROBABILITY | AREA FRAGMENTATION OCCURRENCE | AREA FRAGMENTATION OCCURRENCE PROBABILITY | · · · |
| INTERCONNECTION LINE ID = 1 (BETWEEN HOKKAIDO AND HONSHU) | YES | 60% | YES | 90% | · · · |
| INTERCONNECTION LINE ID = 2 (BETWEEN TOHOKU AND TOKYO) | NO | 0% | NO | 0% | · · · |
| INTERCONNECTION LINE ID = 3 (BETWEEN TOKYO AND CHUBU) | NO | 0% | NO | 0% | · · · |
| INTERCONNECTION LINE ID = 4 (BETWEEN CHUBU AND KANSAI) | NO | 0% | NO | 0% | · · · |
| INTERCONNECTION LINE ID = 5 (BETWEEN CHUGOKU AND HOKURIKU) | NO | 0% | NO | 0% | · · · |
| INTERCONNECTION LINE ID = 6 (BETWEEN HOKURIKU AND KANSAI) | NO | 0% | NO | 0% | · · · |
| INTERCONNECTION LINE ID = 7 (BETWEEN KANSAI AND CHUGOKU) | NO | 0% | NO | 0% | · · · |
| INTERCONNECTION LINE ID = 8 (BETWEEN KANSAI AND SHIKOKU) | NO | 0% | NO | 0% | · · · |
| INTERCONNECTION LINE ID = 9 (BETWEEN CHUGOKU AND SHIKOKU) | NO | 0% | NO | 0% | · · · |
| INTERCONNECTION LINE ID = 10 (BETWEEN CHUGOKU AND KYUSHU) | NO | 0% | NO | 0% | · · · |

[Fig. 38]

(CALCULATION EXAMPLE)

NODE 1

MEMBERS BELONGING TO NODE 1
CLUSTER 1: 10 PERSONS ⇒ SIMPLE AVERAGE $M_1$
CLUSTER 3: 6 PERSONS ⇒ SIMPLE AVERAGE $M_3$
CLUSTER 4: 3 PERSONS ⇒ SIMPLE AVERAGE $M_4$
CLUSTER 7: 1 PERSON ⇒ SIMPLE AVERAGE $M_7$

MODEL PRICE CURVE CANDIDATES OF NODE 1

$$T_1 = M_1 \times \frac{10}{20} + M_3 \times \frac{6}{20} + M_4 \times \frac{3}{20} + M_7 \times \frac{1}{20}$$
$$T_2 = M_1$$
$$T_3 = M_3$$
$$\cdots$$

EP 3 582 173 B1

[Fig. 39]

(CALCULATION EXAMPLE OF PRICE PREDICTION CURVE)

MODEL PRICE CURVE × N
(PLURALITY OF CANDIDATES FROM DECISION TREE)

EXPAND OR CONTRACT MODEL PRICE CURVE IN ACCORDANCE WITH AVERAGE PRICE AND MINIMUM PRICE

DAILY AVERAGE PRICE

DAILY MINIMUM PRICE

0:00

24:00

[Fig. 40]

(CORRECTION EXAMPLE OF PRICE PREDICTION CURVE)

PRICE PREDICTION CURVE

0:00 24:00

0:00 24:00

AREA FRAGMENTATION NON-OCCURRENCE TIME

32

[Fig. 41]

MARKET FRAGMENTATION PREDICTION PROCESSING

START

DEMAND PREDICTION — S81

ACQUISITION OF SUPPLY PLAN DATA — S82

PREDICTION OF MARKET SUPPLY CAPACITY — S83

ACQUISITION OF INTERCONNECTION LINE EMPTY CAPACITY PLANNED VALUE — S84

ACQUISITION OF ATTRIBUTE INFORMATION — S85

PREDICTION OF MARKET FRAGMENTATION BETWEEN AREAS — S86

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010138363 A1
- JP 2008225755 A
- JP 2011018375 A